# EUROPEAN PATENT APPLICATION

(11) **EP 4 145 934 A1**
(43) Date of publication of application: **08.03.2023**
(21) Application number: 21813195.1
(22) Date of filing: 25.05.2021
(51) Int. Cl.: H04W 72/04

(54) **METHOD, APPARATUS, AND SYSTEM FOR INDICATING SIDELINK RESOURCE**

(30) Priority: 27.05.2020 CN 202010458799; 30.07.2020 CN 202010755159
(71) Applicant: Huawei Technologies Co., Ltd., Longgang District, Shenzhen, Guangdong 518129 (CN)
(72) Inventor: LIU, Yun, Shenzhen, Guangdong 518129 (CN)
(74) Representative: Gill Jennings & Every LLP
(86) International application number: PCT/CN2021/095817
(87) International publication number: WO 2021/238920

(57) **Abstract**

Embodiments of this application provide a method for indicating a sidelink resource, an apparatus, and a system, and relate to the field of communications technologies, so that sidelink resources that are recommended by a first terminal to a second terminal and that are used to transmit data are more reliable. The solution includes: The first terminal determines a plurality of sidelink resources, where the plurality of sidelink resources are resources used by the second terminal to send data to the first terminal, and the plurality of sidelink resources include an aperiodic resource and/or a periodic resource. The first terminal sends first information to the second terminal, where the first information includes a periodicity of the periodic resource and a validity period of the periodic resource, and/or first indication information, and the first indication information indicates the periodic resource or the aperiodic resource in the plurality of sidelink resources. The solution may be applied to fields such as unmanned driving, autonomous driving, assisted driving, intelligent driving, connected driving, intelligent connected driving, and car sharing.

## Description

This application claims priority to Chinese Patent Application No. 202010458799.4, filed with the China National Intellectual Property Administration on May 27, 2020 and entitled "METHOD FOR PROVIDING ASSISTANCE INFORMATION AND UE", and claims priority to Chinese Patent Application No. 202010755159.X, filed with the China National Intellectual Property Administration on July 30, 2020 and entitled "METHOD FOR INDICATING SIDELINK RESOURCE, APPARATUS, AND SYSTEM", which are incorporated herein by reference in their entireties.

### TECHNICAL FIELD

Embodiments of this application relate to the field of communications technologies, and in particular, to a method for indicating a sidelink resource, an apparatus, and a system.

### BACKGROUND

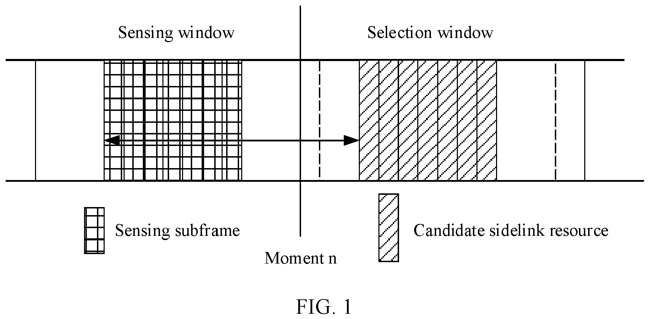

In a sensing mechanism proposed in release 14 (release, Rel-14) V2X, a terminal senses spectrum usage, and uses the spectrum usage as a basis for selecting a resource when the terminal subsequently transmits data on a sidelink resource. As shown in FIG. 1, a terminal continuously senses spectrum usage (for example, whether a sidelink resource is occupied by another terminal or signal quality of a sidelink resource). When there is a data transmission requirement, that is, at a moment n, the terminal determines locations of a sensing window (sensing window) and a selection window (selection window). The terminal senses one or more sidelink resources in the sensing window, and subsequently determines a location of an optional sidelink resource from the one or more sidelink resources in the selection window. In Rel-14 V2X, a transmission resource is only used for a periodic service. Therefore, the terminal may estimate information, that exists after a periodicity, that is, after a gap (gap), such as an occupation status and a priority of any sidelink resource in the selection window based on signal strengths of sensed sidelink resources in the sensing window, and select a sidelink resource used for transmission from sidelink resources with relatively weak signals or no signals, thereby minimizing interference.

The sensing mechanism in Rel-14 is used by the terminal to send data. However, a location of the terminal serving as a sender terminal is different from a location of a receiver terminal. A sidelink resource selected by the sender terminal may have a relatively weak signal or no signal for the sender terminal, but may have a relatively strong signal for the receiver terminal. Therefore, if the sender terminal sends data to the receiver terminal on the sidelink resource, data receiving quality of the receiver terminal may be relatively poor. Currently, although the receiver terminal may recommend information about one or more sidelink resources to the sender terminal through resource sensing, to assist the sender terminal in sending data to the receiver terminal, it is difficult for the receiver terminal to determine a data transmission requirement moment of the sender terminal. Therefore, when there is no data transmission requirement moment, it is difficult for the receiver terminal to determine locations of a sensing window and a selection window.

### SUMMARY

Embodiments of this application provide a method for indicating a sidelink resource, an apparatus, and a system, so that sidelink resources that are recommended by a first terminal to a second terminal and that are used to transmit data are more reliable.

To achieve the foregoing objective, embodiments of this application provide the following technical solutions.

According to a first aspect, an embodiment of this application provides a method for indicating a sidelink resource, including: A first terminal determines a plurality of sidelink resources that can be used by a second terminal to send data to the first terminal (in other words, the plurality of sidelink resources are sidelink resources used by the second terminal to send data to the first terminal), where the plurality of sidelink resources include an aperiodic resource and/or a periodic resource. The first terminal sends first information to the second terminal, where the first information includes a periodicity of the periodic resource and a validity period of the periodic resource, and/or first indication information, and the first indication information indicates the periodic resource or the aperiodic resource in the plurality of sidelink resources.

In the foregoing solution, the first terminal sends the first information to the second terminal, the first information includes the periodicity and the validity period of the periodic resource in the plurality of sidelink resources, and/or the first indication information, and the first indication information indicates the periodic resource or the aperiodic resource in the plurality of sidelink resources. Therefore, the second terminal determines the validity period and the periodicity of the periodic resource in the plurality of sidelink resources, and determines the aperiodic resource in the plurality of sidelink resources based on the first information, to implement a scenario in which a sidelink resource recommended by the first terminal to the second terminal is not limited to a periodic resource. In addition, the validity period of the periodic resource helps the second terminal determine a time period in which the periodic resource is valid and a moment after which the periodic resource becomes invalid. In this solution, when the first terminal does not know a data transmission requirement moment of the second terminal, the validity period is configured for the periodic resource in the plurality of sidelink resources and the aperiodic resource in the plurality of sidelink resources is indicated, so that the second terminal can more easily match a data transmission requirement moment of a sender terminal when performing data transmission. This improves reliability that the first information assists the second terminal in selecting a sidelink resource.

In a possible implementation, each of the plurality of sidelink resources in this embodiment of this application is a periodic resource. The periodicity and the validity period are applicable to each sidelink resource. In this way, when each sidelink resource is a periodic resource, a same periodicity and a same validity period are matched for each sidelink resource, and the same periodicity and the same validity period are used in the first information, so that signaling overheads can be reduced.

In a possible implementation, each of the plurality of sidelink resources is a periodic resource, the periodicity includes a periodicity of each sidelink resource, and the validity period includes a validity period of each sidelink resource. In this solution, the periodicity and the validity period are matched for each sidelink resource, so that the plurality of sidelink resources recommended by the first terminal to the second terminal are more flexible, and an unknown data transmission requirement moment of the second terminal is more easily matched than a fixed periodicity.

In a possible implementation, when the first indication information indicates that each of the plurality of sidelink resources is a periodic resource, the first indication information further indicates a periodicity and/or a validity period of each of the plurality of sidelink resources. In this way, the first indication information is used to not only determine that each sidelink resource is a periodic resource, but also determine the periodicity and the validity period of each sidelink resource.

In a possible implementation, when the first indication information is a preset value, the first indication information indicates that the plurality of sidelink resources are all aperiodic resources. This helps the second terminal determine that the plurality of sidelink resources are all aperiodic resources.

In a possible implementation, the plurality of sidelink resources include a periodic resource and an aperiodic resource, the first information further includes second indication information, the second indication information indicates the periodic resource in the plurality of sidelink resources, and the first indication information indicates the aperiodic resource in the plurality of sidelink resources. The first indication information and the second indication information jointly indicate the aperiodic resource and the periodic resource in the plurality of sidelink resources. In addition, the second indication information may further indicate one or more of the periodicity and the validity period of the periodic resource.

In a possible implementation, the periodicity and the validity period are applicable to each periodic resource in the plurality of sidelink resources.

In a possible implementation, the periodicity includes a periodicity of each periodic resource in the plurality of sidelink resources, and the validity period includes a validity period of each periodic resource.

In a possible implementation, different periodic resources in the plurality of sidelink resources have different periodicities, and the different periodic resources have a same validity period.

In a possible implementation, the validity period includes a quantity of repetitions or valid duration.

In a possible implementation, a start moment of the valid duration is a moment at which the second terminal sends a trigger message, and the trigger message is used to trigger the first terminal to send the first information to the second terminal; or a start moment of the valid duration is a moment at which the first terminal sends the first information; or a start moment of the valid duration is a start moment of the earliest sidelink resource in the plurality of sidelink resources; or a start moment of the valid duration is a start moment of a sidelink resource.

In a possible implementation, valid duration of a first periodic resource in the plurality of sidelink resources is determined based on an end moment of the first periodic resource and a start moment of the first periodic resource.

In a possible implementation, a quantity of repetitions of the first periodic resource in the plurality of sidelink resources is determined based on the valid duration of the first periodic resource and a periodicity of the first periodic resource.

In a possible implementation, the quantity of repetitions of the first periodic resource is obtained by dividing the valid duration of the first periodic resource by the periodicity of the first periodic resource and performing rounding.

In a possible implementation, the method provided in this embodiment of this application further includes: The first terminal receives the data from the second terminal on a target sidelink resource in the plurality of sidelink resources. Because the plurality of sidelink resources are recommended by the first terminal to the second terminal, receiving the data from the second terminal on the target sidelink resource in the plurality of sidelink resources can improve quality of the received data.

According to a second aspect, an embodiment of this application provides a method for determining a sidelink resource, including: A second terminal receives first information from a first terminal, where the first information includes a periodicity and a validity period of a periodic resource in a plurality of sidelink resources, and/or first indication information, and the first indication information indicates the periodic resource or an aperiodic resource in the plurality of sidelink resources. The second terminal determines the aperiodic resource in the plurality of sidelink resources based on the first information; and/or the second terminal determines a periodicity of each periodic resource in the plurality of sidelink resources and a validity period of each periodic resource based on the first information.

In a possible implementation, the periodicity and the validity period are applicable to each of the plurality of sidelink resources. That the second terminal determines a periodicity of each periodic resource in the plurality of sidelink resources and a validity period of each periodic resource based on the first information includes: The second terminal determines the periodicity carried in the first information as the periodicity of each periodic resource, and determines the validity period carried in the first information as the validity period of each periodic resource.

In a possible implementation, the periodicity includes a periodicity of each sidelink resource, and the validity period includes a validity period of each sidelink resource.

In a possible implementation, the first indication information indicates that the plurality of sidelink resources are all periodic resources, and indicates a periodicity and a validity period of each of the plurality of sidelink resources. That the second terminal determines a periodicity of each periodic resource in the plurality of sidelink resources and a validity period of each periodic resource based on the first information includes: The second terminal determines, based on the first indication information, that the plurality of sidelink resources are all periodic resources, and determines the periodicity of each periodic resource and the validity period of each periodic resource based on the first indication information.

In a possible implementation, that the second terminal determines the aperiodic resource in the plurality of sidelink resources based on the first information includes: When the first indication information is a preset value, the second terminal determines that the plurality of sidelink resources are all aperiodic resources.

In a possible implementation, the first information further includes second indication information, the second indication information indicates the periodic resource in the plurality of sidelink resources, and the first indication information indicates the aperiodic resource in the plurality of sidelink resources. That the second terminal determines the aperiodic resource in the plurality of sidelink resources based on the first information includes: The second terminal determines the aperiodic resource in the plurality of sidelink resources based on the first indication information; and/or that the second terminal determines the aperiodic resource in the plurality of sidelink resources based on the first information includes: The second terminal determines the periodic resource in the plurality of sidelink resources based on the second indication information.

In a possible implementation, the periodicity and the validity period are applicable to each periodic resource in the plurality of sidelink resources.

In a possible implementation, the periodicity includes the periodicity of each periodic resource in the plurality of sidelink resources, and the validity period includes the validity period of each periodic resource.

In a possible implementation, different periodic resources in the plurality of sidelink resources have different periodicities, and the different periodic resources have a same validity period.

In a possible implementation, the validity period includes a quantity of repetitions or valid duration.

In a possible implementation, a start moment of the valid duration is a moment at which the second terminal sends a trigger message, and the trigger message is used to trigger the first terminal to send the first information to the second terminal; or a start moment of the valid duration is a moment at which the first terminal sends the first information; or a start moment of the valid duration is a start moment of the earliest sidelink resource in the plurality of sidelink resources; or a start moment of the valid duration is a start moment of a sidelink resource.

In a possible implementation, valid duration of a first periodic resource in the plurality of sidelink resources is determined based on an end moment of the first periodic resource and a start moment of the first periodic resource.

In a possible implementation, a quantity of repetitions of the first periodic resource in the plurality of sidelink resources is determined based on the valid duration of the first periodic resource and a periodicity of the first periodic resource.

In a possible implementation, the quantity of repetitions of the first periodic resource is obtained by dividing the valid duration of the first periodic resource by the periodicity of the first periodic resource and performing rounding.

In a possible implementation, the method provided in this embodiment of this application further includes: The second terminal sends the data to the first terminal on a target sidelink resource in the plurality of sidelink resources.

According to a third aspect, an embodiment of this application provides a communications apparatus. The communications apparatus can implement the method in any one of the first aspect or the possible implementations of the first aspect, and therefore can further implement the beneficial effects in any one of the first aspect or the possible implementations of the first aspect. The communications apparatus may be a first terminal, or may be an apparatus that can support the first terminal in implementing the method in any one of the first aspect or the possible implementations of the first aspect, for example, a chip applied to the first terminal. The communications apparatus may implement the foregoing method by using software or hardware, or by executing corresponding software by using hardware.

For example, an embodiment of this application provides a communications apparatus. The communications apparatus includes: a processing unit, configured to determine a plurality of sidelink resources, where the plurality of sidelink resources are resources used by a second terminal to send data to the communications apparatus, and the plurality of sidelink resources include an aperiodic resource and/or a periodic resource; and a communications unit, configured to send first information to the second terminal, where the first information includes a periodicity of the periodic resource and a validity period of the periodic resource, and/or first indication information, and the first indication information indicates the periodic resource or the aperiodic resource in the plurality of sidelink resources.

For related descriptions of the periodicity, the validity period, the valid duration, the quantity of repetitions, and the like in the third aspect, refer to the descriptions in the first aspect. Details are not described herein again.

In a possible implementation, the communications unit is further configured to receive the data from the second terminal on a target sidelink resource in the plurality of sidelink resources.

For example, when the communications apparatus is a chip or a chip system in the first terminal, the processing unit may be a processor, and the communications unit may be a communications interface. For example, the communications interface may be an input/output interface, a pin, or a circuit. The processing unit executes instructions stored in a storage unit, so that the first terminal implements the method for indicating a sidelink resource in any one of the first aspect or the possible implementations of the first aspect. The storage unit may be a storage unit (for example, a register or a cache) in the chip, or may be a storage unit (for example, a read-only memory or a random access memory) that is in the first terminal and that is located outside the chip.

According to a fourth aspect, an embodiment of this application provides a communications apparatus. The communications apparatus can implement the method in any one of the second aspect or the possible implementations of the second aspect, and therefore can further implement the beneficial effects in any one of the second aspect or the possible implementations of the second aspect. The communications apparatus may be a second terminal, or may be an apparatus that can support the second terminal in implementing the method in any one of the second aspect or the possible implementations of the second aspect, for example, a chip applied to the second terminal. The communications apparatus may implement the foregoing method by using software or hardware, or by executing corresponding software by using hardware.

For example, the communications apparatus includes: a communications unit, configured to receive first information from a first terminal, where the first information includes a periodicity and a validity period of a periodic resource in a plurality of sidelink resources, and/or first indication information, and the first indication information indicates the periodic resource or an aperiodic resource in the plurality of sidelink resources; and a processing unit, configured to: determine the aperiodic resource in the plurality of sidelink resources based on the first information; and/or determine a periodicity of each periodic resource in the plurality of sidelink resources and a validity period of each periodic resource based on the first information.

In a possible implementation, the periodicity and the validity period are applicable to each of the plurality of sidelink resources. The processing unit is configured to: determine the periodicity as the periodicity of each periodic resource, and determine the validity period as the validity period of each periodic resource.

In a possible implementation, the periodicity includes a periodicity of each sidelink resource, and the validity period includes a validity period of each sidelink resource.

In a possible implementation, the first indication information indicates that the plurality of sidelink resources are all periodic resources, and indicates a periodicity and a validity period of each of the plurality of sidelink resources. The processing unit is configured to: determine, based on the first indication information, that the plurality of sidelink resources are all periodic resources, and determine the periodicity of each periodic resource and the validity period of each periodic resource based on the first indication information.

In a possible implementation, the first indication information is a preset value, and the processing unit is configured to determine that the plurality of sidelink resources are all aperiodic resources.

In a possible implementation, the first information further includes second indication information, the second indication information indicates the periodic resource in the plurality of sidelink resources, and the first indication information indicates the aperiodic resource in the plurality of sidelink resources. The processing unit is configured to determine the aperiodic resource in the plurality of sidelink resources based on the first indication information; and/or the processing unit is configured to determine the periodic resource in the plurality of sidelink resources based on the second indication information.

In a possible implementation, the communications unit is further configured to send data to the first terminal on a target sidelink resource in the plurality of sidelink resources.

For related descriptions of the periodicity, the validity period, the valid duration, the quantity of repetitions, and the like in the fourth aspect, refer to the descriptions in the first aspect. Details are not described herein again.

According to a fifth aspect, an embodiment of this application provides a computer-readable storage medium. The computer-readable storage medium stores computer programs or instructions. When the computer programs or the instructions are run on a computer, the computer is enabled to perform the method for indicating a sidelink resource in any one of the first aspect or the possible implementations of the first aspect. The computer may be a first terminal.

According to a sixth aspect, an embodiment of this application provides a computer-readable storage medium. The computer-readable storage medium stores computer programs or instructions. When the computer programs or the instructions are run on a computer, the computer is enabled to perform the method for determining a sidelink resource in any one of the second aspect or the possible implementations of the second aspect. The computer may be a second terminal.

According to a seventh aspect, an embodiment of this application provides a computer program product including instructions. When the instructions are run on a computer, the computer is enabled to perform the method for indicating a sidelink resource in any one of the first aspect or the possible implementations of the first aspect.

According to an eighth aspect, an embodiment of this application provides a computer program product including instructions. When the instructions are run on a computer, the computer is enabled to perform the method for determining a sidelink resource in any one of the second aspect or the possible implementations of the second aspect.

According to a ninth aspect, an embodiment of this application provides a communications apparatus, configured to implement the methods in any one of the first aspect and the second aspect or the possible designs of the first aspect and the second aspect. The communications apparatus may be the foregoing first terminal, or an apparatus including the foregoing first terminal, or a component (for example, a chip) applied to the first terminal. Alternatively, the communications apparatus may be the foregoing second terminal, or an apparatus including the foregoing second terminal, or a component (for example, a chip) applied to the second terminal. The communications apparatus includes a corresponding module or unit for implementing the foregoing method. The module or unit may be implemented by hardware or software, or by hardware executing corresponding software. The hardware or the software includes one or more modules or units corresponding to the foregoing function.

It should be understood that the communications apparatus described in the ninth aspect may further include a bus and a memory. The memory is configured to store code and data. Optionally, at least one processor, a communications interface, and the memory are coupled to each other.

According to a tenth aspect, an embodiment of this application provides a communications apparatus. The communications apparatus includes at least one processor. The at least one processor is coupled to a memory, and when the communications apparatus runs, the processor executes computer executable instructions or programs stored in the memory, so that the communications apparatus performs the method in any one of the first aspect or the possible designs of the first aspect. For example, the communications apparatus may be a first terminal, or a chip applied to the first terminal.

According to an eleventh aspect, an embodiment of this application provides a communications apparatus. The communications apparatus includes at least one processor. The at least one processor is coupled to a memory, and when the communications apparatus runs, the processor executes computer executable instructions or programs stored in the memory, so that the communications apparatus performs the method in any one of the second aspect or the possible designs of the second aspect. For example, the communications apparatus may be a second terminal, or a chip applied to the second terminal.

It should be understood that the memory described in any one of the tenth aspect and the eleventh aspect may alternatively be replaced with a storage medium. This is not limited in this embodiment of this application. In a possible implementation, the memory described in any one of the tenth aspect and the eleventh aspect may be a memory inside the communications apparatus. Certainly, the memory may alternatively be located outside the communications apparatus, but the at least one processor can still execute the computer executable instructions or programs stored in the memory.

According to a twelfth aspect, an embodiment of this application provides a communications apparatus. The communications apparatus includes one or more modules, configured to implement the method in any one of the first aspect and the second aspect, where the one or more modules may correspond to the steps in the method in any one of the first aspect and the second aspect.

According to a thirteenth aspect, an embodiment of this application provides a chip system. The chip system includes a processor, and the processor is configured to read and execute a computer program stored in a memory, to perform the method in any one of the first aspect or the possible implementations of the first aspect.

Optionally, the chip system may be a single chip or a chip module including a plurality of chips.

Optionally, the chip system further includes a memory, and the processor is connected to the memory through a circuit or a wire.

Further, optionally, the chip system further includes a communications interface. The communications interface is configured to communicate with a module other than the chip.

According to a fourteenth aspect, an embodiment of this application provides a chip system. The chip system includes a processor, and the processor is configured to read and execute a computer program stored in a memory, to perform the method in any one of the second aspect or the possible implementations of the second aspect.

Optionally, the chip system may be a single chip or a chip module including a plurality of chips.

Optionally, the chip system further includes a memory, and the processor is connected to the memory through a circuit or a wire.

Further, optionally, the chip system further includes a communications interface. The communications interface is configured to communicate with a module other than the chip.

According to a fifteenth aspect, an embodiment of this application provides a communications system. The communications system includes a first terminal and a second terminal. The first terminal is configured to perform the method in any one of the first aspect or the possible implementations of the first aspect, and the second terminal is configured to perform the method in any one of the second aspect or the possible implementations of the second aspect.

Any apparatus, computer storage medium, computer program product, chip, or communications system provided above is configured to perform the corresponding method provided above. Therefore, for beneficial effects that can be achieved, refer to the beneficial effects of the corresponding solution in the corresponding method provided above. Details are not described herein again.

### BRIEF DESCRIPTION OF DRAWINGS

FIG. 1 is a schematic diagram of resource listening according to an embodiment of this application;
FIG. 2 is a diagram of an architecture of a communications system according to an embodiment of this application;
FIG. 3 is a schematic diagram of a structure of a communications device according to an embodiment of this application;
FIG. 4 is a schematic diagram of indicating a periodic sidelink resource according to an embodiment of this application;
FIG. 5 is a schematic diagram of a method for indicating a sidelink resource and determining a sidelink resource;
FIG. 6 is a schematic diagram of periodic sidelink resources with a same periodicity according to an embodiment of this application;
FIG. 7 is a schematic diagram of periodic sidelink resources with different periodicities according to an embodiment of this application;
FIG. 8 is another schematic diagram of periodic sidelink resources with a same periodicity according to an embodiment of this application;
FIG. 9 is another schematic diagram of periodic sidelink resources with different periodicities according to an embodiment of this application;
FIG. 10 is a schematic diagram of a structure of a communications apparatus according to an embodiment of this application; and
FIG. 11 is a schematic diagram of a structure of a chip according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first terminal and a first terminal are merely intended to distinguish between different terminals, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in this application, the term "example" or "for example" is used to represent giving an example, an illustration, or a description. Any embodiment or design scheme described as an "example" or "for example" in this application should not be explained as being more preferred or having more advantages than another embodiment or design scheme. Exactly, use of the term such as "example" or "for example" is intended to present a related concept in a specific manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally represents an "or" relationship between associated objects. "At least one of the following" or a similar expression thereof indicates "any combination of the following", including "one or any combination of the following". For example, at least one of a, b, or c may represent: a, b, c, a and b, a and c, b and c, or a, b, and c, where a, b, and c may be singular or plural.

The technical solutions in this application may be applied to various communications systems, for example, a long term evolution (long time evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, a public land mobile network (public land mobile network, PLMN) system, a device-to-device (device to device, D2D) network system, a machine-to-machine (machine-to-machine, M2M) network system, and a future 5G communications system.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems. In embodiments of this application, an example in which a provided method is applied to an NR system or a 5G network is used for description.

Before embodiments of this application are described, terms in embodiments of this application are first described.
(1) Sidelink (Sidelink, SL): The sidelink is defined for direct communication between terminals, that is, a link on which direct communication is performed between the terminals without forwarding by a base station.
(2) Sidelink resource: The sidelink resource is a resource used by a terminal 1 to transmit sidelink information to a terminal 2 on a sidelink.
(3) Sidelink information: The sidelink information is sidelink data or control information transmitted between any two terminals on a sidelink, and may also be referred to as a first data packet or a V2X service.

The following describes the technical solutions in this application with reference to the accompanying drawings.

To improve security and intelligence of a transportation system, an idea of an intelligent transportation system gradually emerges. In a recent phase, development of an intelligent transportation system mainly focuses on the field of intelligent road transportation systems, that is, vehicle-to-everything (vehicle-to-everything, V2X). V2X communication includes vehicle-to-vehicle (vehicle-to-vehicle, V2V) communication, vehicle-to-infrastructure (vehicle-to-infrastructure, V2I) communication, and vehicle-to-pedestrian (vehicle-to-people, V2P) communication. V2X applications improve driving safety, reduce congestion and vehicle energy consumption, and improve traffic efficiency, for example, communication with an infrastructure such as a traffic light, a campus, and a railway crossing. A vehicle-to-everything system is a sidelink transmission technology based on long term evolution (long term evaluation, LTE) V2V or new radio V2V Different from a conventional LTE system or NR that uses a manner in which communication data is received or sent by a network device, the vehicle-to-everything system uses a manner that terminals directly communicate with each other.

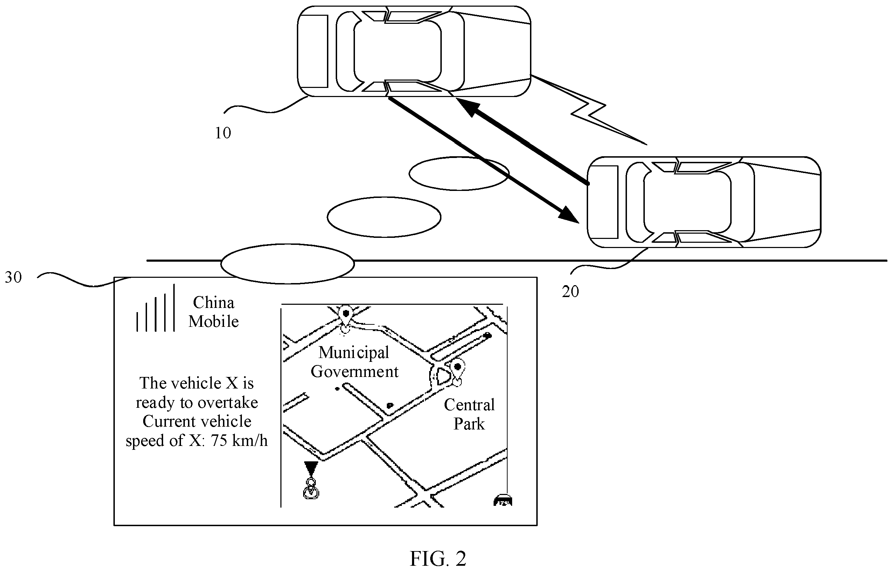

Based on the foregoing description, FIG. 2 is a schematic diagram of a structure of a communications system (which may also be referred to as a V2V communications system) according to an embodiment of this application. The communications system includes a terminal 10 and a terminal 20. It should be understood that FIG. 2 shows one terminal 10 and one terminal 20.

There is a first interface used for direct communication between the terminal 10 and the terminal 20, and the first interface may be referred to as a PC5 interface. A transmission link that is on the PC5 interface and that is used for communication between the terminal 10 and the terminal 20 may be referred to as a sidelink.

For example, the PC5 interface may use a dedicated frequency band (for example, 5.9 GHz).

The terminal 10 and the terminal 20 may communicate with each other on the sidelink between the terminal 10 and the terminal 20 by using a resource. In this embodiment of this application, a scenario in which the terminal 10 and the terminal 20 communicate with each other on the sidelink may be referred to as a sidelink communication scenario. For example, in this embodiment of this application, the resource used by the terminal 10 and the terminal 20 to communicate with each other on the sidelink may be referred to as a sidelink resource. A specific name of the resource is not limited in this embodiment of this application, and may be set based on a requirement.

On the sidelink, data may be sent between two terminals, and a sender terminal does not need to first send the data to a base station, and then send the data to a receiver terminal through forwarding by a core network. This can greatly reduce a data delay.

NR supports sidelink broadcast, multicast, and unicast transmission within coverage, out of coverage, and within partial coverage. Physical channels used for transmission include a control channel (for example, a physical sidelink control channel (physical sidelink control channel, PSCCH)), a data channel (for example, a physical sidelink shared channel (physical sidelink shared channel, PSSCH)), and a feedback channel (for example, a physical sidelink feedback channel (physical sidelink feedback channel, PSFCH)).

For example, the terminal 10 sends sidelink service data to the terminal 20 by using the sidelink resource. In this case, the terminal 10 may currently obtain the sidelink resource in the following mode. For a mode in which the terminal 20 obtains the sidelink resource, refer to the mode in which the terminal 10 obtains the sidelink resource. Details are not described subsequently.

Mode 1 (mode 1): Resource allocation mode scheduled by a network.

Mode 1: The terminal 10 performs data transmission with a network device in a radio resource control (radio resource control, RRC) connected mode. In this case, the network device communicating with the terminal 10 may schedule, for the terminal 10, the sidelink resource used to transmit the sidelink service data. For example, the terminal 10 sends a scheduling request (scheduling request, SR) and a sidelink buffer status report (buffer status reporting, BSR) to the network device. The sidelink BSR is used to determine a sidelink communication data amount of the terminal 10. The network device may determine the sidelink communication data amount of the terminal 10 based on the sidelink BSR, and schedule, for the terminal 10, the sidelink resource required for transmitting the sidelink service data. The network device schedules, by using a configured sidelink radio network temporary identifier (SL-radio network temporary identity, SL-RNTI), the sidelink resource used for sidelink communication.

Mode 2 (mode 2): Resource selection mode autonomously selected by a terminal.

Mode 2: The terminal 10 selects a sidelink resource from a resource pool (which usually includes one or more sidelink resources). For example, when the terminal 10 is within network coverage, the resource pool is a resource broadcast by a network device in system information. When the terminal 10 is out of network coverage, the resource pool is a resource preconfigured for the terminal 10. The resource pool may be a specific resource pool for the terminal 10, that is, only the terminal 10 may select a sidelink resource from the resource pool. Alternatively, the resource pool may be a resource pool shared by a plurality of terminals including the terminal 10, that is, a terminal other than the terminal 10 may also select a resource from the resource pool. For the latter, when the terminal 10 autonomously selects a resource from the resource pool, the terminal 10 may perform listening on the resource pool to select a sidelink resource.

Sidelink transmission is based on a resource pool. The resource pool is a logical concept. One resource pool includes a plurality of physical resources, and any physical resource thereof is used to transmit data. A terminal may transmit data by using a resource in the resource pool.

Specifically, to ensure quality of the sidelink resource used for the sidelink service data sent by the terminal 10, and avoid a resource collision caused because the plurality of terminals randomly select a sidelink resource from the resource pool when the terminal 10 autonomously selects a sidelink resource, that is, avoid communication quality deterioration caused because the resource selected by the terminal 10 is occupied by the plurality of other terminals, the terminal 10 may predict usage of a sidelink resource in a future time period 1 through listening, and use the usage of the sidelink resource in the time period 1 as a listening result. The usage of the sidelink resource may indicate whether another terminal occupies the sidelink resource in the future time period 1. Therefore, based on the listening result, the terminal 10 may reserve a corresponding sidelink resource in the listening result, to ensure communication quality of the terminal 10. In addition, the sidelink resource reserved by the terminal 10 through listening has a validity period. For example, in 5G NR, a validity period of a listening result of a periodic service and a validity period of a listening result of an aperiodic service are different, and both are within a specific time in unit of a millisecond.

In V2X communication based on LTE or NR, the terminal 10 may obtain a listening result by using or based on a listening (or may also be referred to as sensing (sensing)) process defined in the LTE release (Release) 14 standard protocol. For example, a listening result of a sidelink resource may be used to indicate any one or more of the following: an identifier or a location of a specific sidelink resource in the resource pool, signal strength on the sidelink resource, signal power on the sidelink resource, and a channel busy ratio (channel busy ratio, CBR) of the sidelink resource.

FIG. 2 shows a scenario according to an embodiment of this application. As shown in FIG. 2, the terminal 10 is, for example, a vehicle whose identifier is X (vehicle X for short). If the vehicle X determines to perform an overtaking operation, the vehicle X may send, on a sidelink resource, service data (for example, the service data may be an overtaking indication and a current vehicle speed (for example, 75 km/h) of the vehicle X) in a dialog box 30 to a terminal 20 (for example, a vehicle whose identifier is Y (vehicle Y for short)) in front of the vehicle X. Therefore, after receiving the current vehicle speed of the vehicle X and the overtaking indication, the vehicle Y slows down to travel, so that the vehicle X safely overtakes the vehicle. Before the terminal 10 sends service data to the terminal 20, the terminal 10 may select a sidelink resource from a sending resource pool.

Based on this, when the terminal 10 sends the service data to the terminal 20, the terminal 20 may perform sensing on a receiving resource in a receiving resource pool (that is, the foregoing sending resource pool), and send, by using assistance information, a receiving resource with relatively good communication quality in the receiving resource pool to the terminal 10 as a sensing result, so that the terminal 10 can consider the assistance information sent by the terminal 20 when selecting a resource. This improves data receiving quality of the terminal 10.

It should be noted that sidelink resources included in the sending resource pool and the receiving resource pool in this application may be partially the same or completely the same. The sending resource pool and the receiving resource pool are relative concepts. If the terminal 10 selects a sidelink resource from a resource pool 1 to send service data to the terminal 20, the resource pool 1 is a sending resource pool for the terminal 10, and is a receiving resource pool for the terminal 20. In addition, the terminal 20 may also have a requirement for sending service data, a receiving resource pool is mainly used to distinguish from "a resource pool used when the terminal 20 is used as a data transmit end", and the receiving resource pool of the terminal 20 is a sending resource pool of the terminal 10.

The scenario shown in FIG. 2 is merely an example, and another scenario of communication between terminals is also applicable to the solutions of this application.

It should be noted that, in the system shown in FIG. 2, Uu (UTRAN-to-UE) air interface transmission is considered, and the communications system may further include a network device in addition to the terminal 10 and the terminal 20. Considering SL air interface transmission, both a transmit end and a receive end of wireless communication are terminals. In the diagram of the system architecture, the network device is an entity that may be used together with the terminal and that may be configured to transmit or receive a signal. The network device may be a conventional macro evolved NodeB (evolved NodeB, eNB) in a conventional universal mobile telecommunications system/long term evolution (Universal Mobile Telecommunications System/Long Term Evolution, UMTS/LTE) wireless communications system, may be a micro evolved NodeB eNB in a heterogeneous network (heterogeneous network, HetNet) scenario, may be a baseband unit (Baseband Unit, BBU) and a remote radio unit (Remote Radio Unit, RRU) in a distributed base station scenario, may be a baseband unit pool BBU pool and a remote radio unit RRU in a cloud radio access network (cloud radio access network, CRAN) scenario, may be a next-generation NodeB (next generation NodeB, gNB), a relay station, an access point, a vehicle-mounted device, or a wearable device in a future wireless communications system, may be a network device in a 5th-generation mobile communications technology (5th generation mobile networks, 5th generation wireless systems, or 5th-Generation, 5G for short) network (which may also be referred to as new radio (New Radio, NR)), may be a network device in a future evolved PLMN network, or the like.

The terminal 10 or the terminal 20 is a device having a wireless communication function. The terminal 10 or the terminal 20 may be deployed on land, and includes an indoor or outdoor device, a handheld device, or a vehicle-mounted device. Alternatively, the terminal 10 or the terminal 20 may be deployed on water (for example, on a ship), or may be deployed in the air (for example, on an airplane, a balloon, or a satellite). The terminal, also referred to as user equipment (user equipment, UE), a mobile station (mobile station, MS), a mobile terminal (mobile terminal, MT), a terminal device, and the like, is a device that provides voice and/or data connectivity for a user. For example, the terminal includes a handheld device or a vehicle-mounted device having a wireless connection function. Currently, the terminal may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a flight device (for example, an intelligent robot, a hot balloon, an uncrewed aerial vehicle, or an aircraft), or the like. In a possible application scenario of this application, the terminal is a terminal that often operates on land, for example, a vehicle-mounted device. In this application, for ease of description, a chip deployed in the foregoing device, for example, a system-on-a-chip (System-On-a-Chip, SOC), a baseband chip, or another chip having a communication function, may also be referred to as a terminal.

The terminal may be a vehicle having a corresponding communication function, a vehicle-mounted communications apparatus, or another embedded communications apparatus, or may be a handheld communications device of a user, including a mobile phone, a tablet computer, or the like.

For example, in embodiments of this application, the terminal may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that is directly worn on the body or integrated into clothes or accessories of a user. The wearable device is more than a hardware device, and is also used to implement a powerful function through software support, data exchange, and cloud interaction. In a broader sense, the wearable intelligent device is full-featured, has a large size, and can implement all or some functions without depending on a smartphone. For example, the wearable intelligent device is a smart watch or smart glasses. Alternatively, the wearable intelligent device focuses only on a specific application function, and needs to be used with another device such as a smartphone. For example, the wearable intelligent device is a smart wristband, a smart helmet, or smart jewelry for physical sign monitoring. The terminal may be a vehicle-mounted communications module or another embedded communications module, or may be a handheld communications device of a user, including a mobile phone, a tablet computer, and the like. In FIG. 2, VUE (vehicular user equipment) is used as an example of the terminal in the embodiments of this application.

When the solutions described in embodiments of this application are applied to a V2X scenario, the solutions may be applied to the following fields: unmanned driving (unmanned driving), automated driving (automated driving/ADS), driver assistance (driver assistance/ADAS), intelligent driving (intelligent driving), connected driving (connected driving), intelligent network driving (Intelligent network driving), and car sharing (car sharing). Certainly, the solutions described in embodiments of this application may also be applied to interaction between a band and a mobile phone, and interaction between VR glasses and a mobile phone.

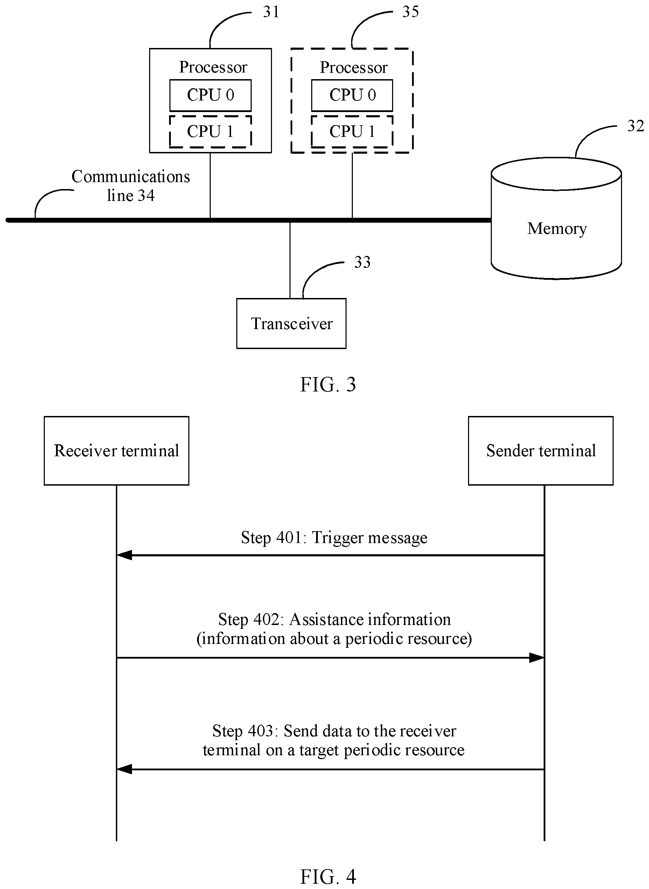

FIG. 3 is a schematic diagram of a hardware structure of a communications device according to an embodiment of this application. For hardware structures of a first terminal and a second terminal in embodiments of this application, refer to the structure shown in FIG. 3. The communications device includes a processor 31, a communications line 34, and at least one transceiver (description is provided merely by using an example in which the communications device includes a transceiver 33 in FIG. 3).

The processor 31 may be a general-purpose central processing unit (central processing unit, CPU), a microprocessor, an application-specific integrated circuit (application-specific integrated circuit, ASIC), or one or more integrated circuits configured to control program execution of the solutions of this application.

The communications line 34 may include a path for transferring information between the components described above.

The transceiver 33 is any apparatus such as a transceiver, and is configured to communicate with another device or a communications network such as the Ethernet, a radio access network (radio access network, RAN), or a wireless local area network (wireless local area network, WLAN).

Optionally, the communications device may further include a memory 32.

The memory 32 may be a read-only memory (read-only memory, ROM) or another type of static storage device capable of storing static information and instructions, or a random access memory (random access memory, RAM) or another type of dynamic storage device capable of storing information and instructions. Alternatively, the memory 32 may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, this is not limited herein. The memory may exist independently, and is connected to the processor through the communications line 34. The memory 32 may alternatively be integrated with the processor 31.

The memory 32 is configured to store computer-executable instructions for executing the solutions in this application, and execution is controlled by the processor 31. The processor 31 is configured to execute the computer-executable instructions stored in the memory 32, to implement a method for indicating a sidelink resource and a method for determining a sidelink resource provided in embodiments of this application.

Optionally, the computer-executable instructions in embodiments of this application may also be referred to as application program code. This is not specifically limited in embodiments of this application.

During specific implementation, in an embodiment, the processor 31 may include one or more CPUs, for example, a CPU 0 and a CPU 1 in FIG. 3.

During specific implementation, in an embodiment, the communications device may include a plurality of processors, for example, the processor 31 and a processor 35 in FIG. 3. Each of the processors may be a single-core processor (single-CPU) or a multi-core processor (multi-CPU). The processor herein may be one or more devices, circuits, and/or processing cores configured to process data (for example, computer program instructions).

With evolution of communications technologies, the internet of everything is accelerating. During Release 14 and Release 15, 3GPP introduces support for V2V and V2X (Vehicle-to-Everything) services in LTE to extend a 3GPP platform to the automobile industry. During Release 16, a related design of NR V2X is studied. Further optimization continues to be discussed in NR sidelink enhancement of Release 17. Specifically, resource allocation enhancement is involved. Based on power consumption reduction solutions proposed in Release 14 and Release 15, further optimization or a new solution is proposed to reduce power. In addition to the objective of reducing power consumption, improving reliability and reducing a delay are other two main objectives of the solution. Based on resource allocation enhancement, a receiver terminal mainly sends information about a group of sidelink resources to a sender terminal, and the sender terminal considers the information about the group of sidelink resources transmitted by the receiver terminal during data transmission. An advantage of this solution is as follows: When determining a group of sidelink resources, the receiver terminal fully considers an interference status near the receiver terminal, and notifies the sender terminal of the group of sidelink resources, so that the sender terminal can select, from the group of sidelink resources, a sidelink resource used to transmit data to the receiver terminal.

FIG. 4 shows a process in which a receiver terminal assists the receiver terminal in determining a sidelink resource. The method includes the following steps: Step 401: The sender terminal sends a trigger message to the receiver terminal, and correspondingly, the receiver terminal receives the trigger message (trigger information) from the sender terminal. Step 402: The receiver terminal sends assistance information (assistance information) to the sender terminal based on the trigger message, where the assistance information includes identification information of one or more periodic resources recommended by the receiver terminal to the sender terminal. Step 403: The sender terminal sends data to the receiver terminal on a target periodic resource in the one or more periodic resources.

However, the periodic resource may have one transmission opportunity every 100 ms or several seconds, and a frequency domain resource for transmission is relatively fixed. In addition, when the receiver terminal feeds back the periodic resource, the periodic resource does not correspond to a data transmission requirement moment n of the sender terminal, and the receiver terminal cannot obtain the data transmission requirement moment n of the sender terminal. Therefore, even if the receiver terminal feeds back the assistance information to the sender terminal, the assistance information may not correspond to the data transmission requirement moment n of the sender terminal, and consequently is invalid.

Based on this, an embodiment of this application provides a method for indicating a sidelink resource. In the method, a first terminal (a receiver terminal) performs resource sensing in a sensing window (or referred to as a listening window), and selects a plurality of sidelink resources in a selection window. The plurality of sidelink resources are sensed by the first terminal. Therefore, when subsequently sending data to the first terminal by using a sidelink resource, a second terminal (that is, a sender terminal) may consider a sidelink resource in the plurality of sidelink resources, to ensure quality of the data received by the first terminal. In addition, the first terminal indicates a periodicity and a validity period of the periodic resource, or an aperiodic resource in the plurality of sidelink resources to the second terminal by using first information. Therefore, in this solution, when the first terminal does not know a data transmission requirement moment of the second terminal, the validity period is configured for the periodic resource in the plurality of sidelink resources and the aperiodic resource in the plurality of sidelink resources is indicated, so that the second terminal can more easily match a data transmission requirement moment n of a sender terminal when performing data transmission.

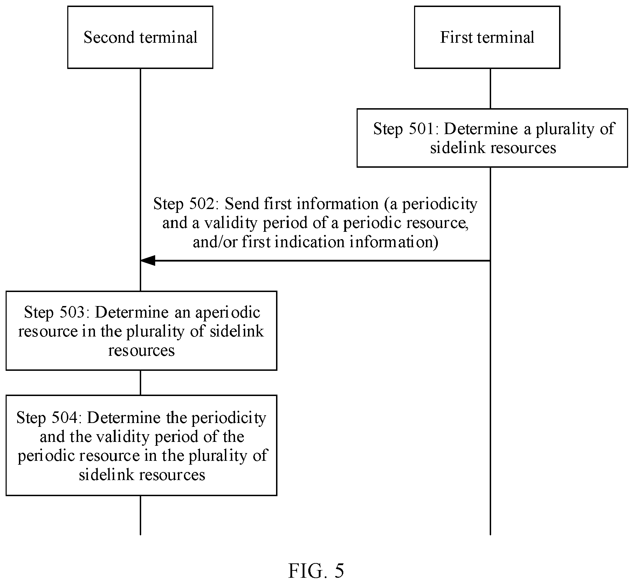

The following specifically describes, with reference to FIG. 5 to FIG. 9, a method for indicating a sidelink resource and a method for determining a sidelink resource provided in embodiments of this application.

It should be noted that names of messages between network elements, names of parameters in the messages, or the like in the following embodiments of this application are merely examples, and there may be other names during specific implementation. This is not specifically limited in embodiments of this application.

It should be noted that mutual reference may be made between embodiments of this application. For example, for same or similar steps, mutual reference may be made between a method embodiment, a communications system embodiment, and an apparatus embodiment. This is not limited.

In embodiments of this application, a specific structure of an execution body of the method for indicating a sidelink resource or the method for determining a sidelink resource is not particularly limited in embodiments of this application, provided that a program recording code for the method for indicating a sidelink resource and the method for determining a sidelink resource in embodiments of this application can be run, to perform communication according to the method for indicating a sidelink resource or the method for determining a sidelink resource in embodiments of this application. For example, the method for indicating a sidelink resource provided in embodiments of this application may be performed by a function module that is in a first terminal and that can invoke and execute the program, or may be performed by a communications apparatus applied to the first terminal, for example, a chip, a chip system, or an integrated circuit. The chip, the chip system, or the integrated circuit may be disposed inside the first terminal, or may be independent of the first terminal. This is not limited in embodiments of this application. The method for determining a sidelink resource provided in embodiments of this application may be performed by a function module that is in a second terminal and that can invoke and execute the program, or may be performed by a communications apparatus applied to the second terminal, for example, a chip, a chip system, or an integrated circuit. The chip, the chip system, or the integrated circuit may be disposed inside the second terminal, or may be independent of the second terminal. This is not limited in embodiments of this application. The following embodiment is described by using an example in which the method for indicating a sidelink resource is performed by the first terminal and the method for determining a sidelink resource is performed by the second terminal.

FIG. 5 shows an embodiment of interaction between a method for indicating a sidelink resource and a method for determining a sidelink resource according to an embodiment of this application. The method includes the following steps.

Step 501: A first terminal determines a plurality of sidelink resources.

It may be understood that the plurality of sidelink resources can be used by a second terminal to send data to the first terminal. In other words, the plurality of sidelink resources are resources that can be used by the second terminal to send data to the first terminal, or the plurality of sidelink resources are resources that can be used by the first terminal to receive data from the second terminal. For example, the plurality of sidelink resources may be time-frequency resources. Receiving quality of receiving data by the first terminal on the plurality of sidelink resources is greater than a preset threshold.

For example, the first terminal may be the terminal 10 in FIG. 1. For example, first information may also be referred to as assistance information. The first terminal may be a receiver terminal, that is, a terminal that may be configured to receive data sent by a sender terminal (that is, the second terminal) on a sidelink. The sender terminal is configured to send data to the first terminal on a sidelink.

It may be understood that before step 501, the first terminal in this embodiment of this application first senses spectrum usage of sidelink resources, and selects, from the sidelink resources obtained through spectrum sensing, a plurality of sidelink resources located in a selection window. For specific implementation of this process, refer to descriptions in the conventional technology. Details are not described herein.

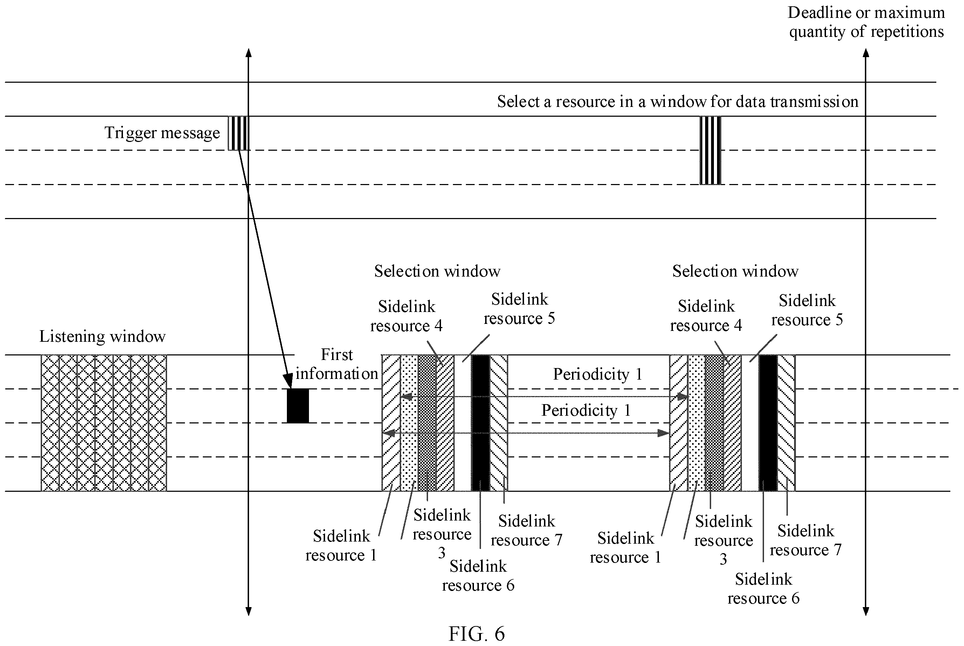

As shown in FIG. 6, start locations (that is, time domain locations) of the plurality of sidelink resources in this embodiment of this application are different. For example, a sidelink resource 1 is located at a moment 1, and a sidelink resource 2 is located at a moment 2. In this way, the second terminal flexibly matches a sidelink resource for data transmission. Certainly, the start locations (that is, the time domain locations) of the plurality of sidelink resources may be the same, but frequency domain locations of the plurality of sidelink resources are different. In this way, the second terminal simultaneously sends a plurality of pieces of data by using sidelink resources whose start locations are the same.

The first terminal in this embodiment of this application may autonomously determine a plurality of sidelink resources. Certainly, the first terminal may alternatively determine a plurality of sidelink resources under trigger of the second terminal. In a case of trigger by the second terminal, before step 501, the method in this embodiment of this application may further include: The second terminal sends a configuration message or a trigger message to the first terminal on a sidelink between the second terminal and the first terminal, and correspondingly, the first terminal receives the configuration message or the trigger message from the second terminal on the sidelink between the first terminal and the second terminal. The configuration message or the trigger message is used to request the first information.

In a possible implementation, the configuration message may be radio resource control (radio resource control, RRC), and the trigger message may be sidelink control information (sidelink control information, SCI).

It may be understood that, before the second terminal determines to send data to the first terminal, the second terminal may send a configuration message or a trigger message to the first terminal.

In this embodiment of this application, the first terminal has a "resource pool", and the first terminal may determine a plurality of sidelink resources from the "resource pool". The sidelink resource in the "resource pool" may be used by the first terminal to receive data, and correspondingly, the sidelink resource in the "resource pool" may be used by the second terminal to send data. To be specific, for a same sidelink resource a in the "resource pool", the first terminal may receive data from the second terminal on the sidelink resource a, and the second terminal may send data to the first terminal on the sidelink resource.

The "resource pool" may be preconfigured for the first terminal and the second terminal, or the "resource pool" may be actively configured by a network device for the first terminal, or may be configured by the network device for the first terminal based on a request of the first terminal. Both the first terminal and the second terminal may perform sensing (sensing) in the "resource pool" to determine a sidelink resource for receiving data or a sidelink resource for sending data. This is not limited in this embodiment of this application.

All of the plurality of sidelink resources may be periodic resources, that is, a quantity of aperiodic resources is 0. Alternatively, all of the plurality of sidelink resources may be aperiodic resources, that is, a quantity of periodic resources is 0. Alternatively, the plurality of sidelink resources include at least one periodic resource and at least one aperiodic resource, that is, both a quantity of aperiodic resources and a quantity of periodic resources are greater than 0. This is not limited in this embodiment of this application.

The periodic resource in this embodiment of this application is a sidelink resource that repeatedly appears based on a preset periodicity. For example, as shown in FIG. 6, the preset periodicity is a periodicity 1, and the periodicity 1 is equal to one slot. If a time domain location of the sidelink resource 1 is a slot 1 for the first time, the sidelink resource 1 is in a slot 2 for the second time, and so on, until a quantity of repetitions of the sidelink resource 1 is reached.

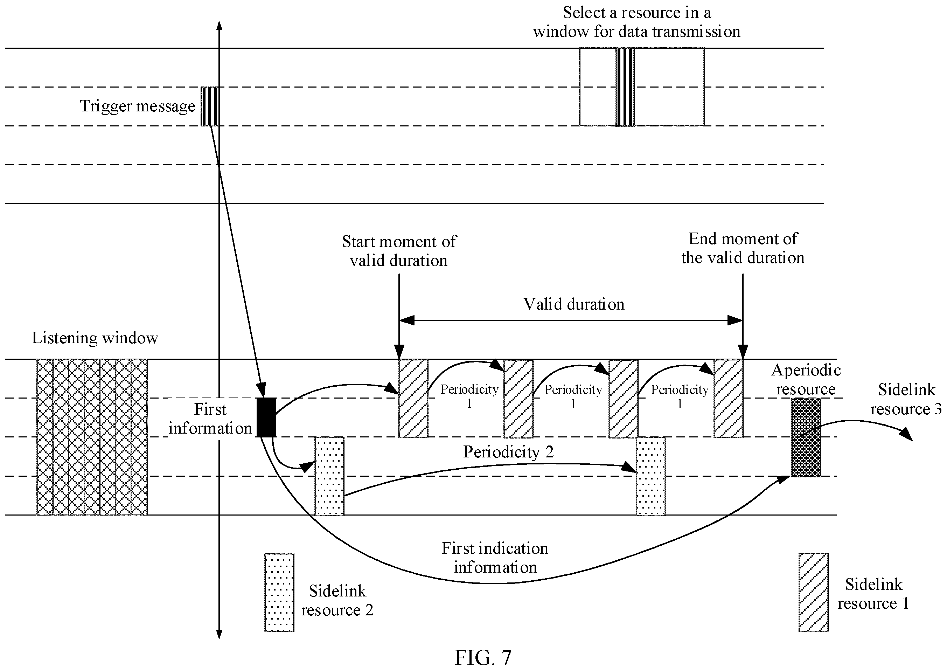

The aperiodic resource in this embodiment of this application is a sidelink resource that appears once at a time-frequency location, for example, an aperiodic resource shown in FIG. 7.

Step 502: The first terminal sends the first information to the second terminal, and correspondingly, the second terminal receives the first information from the first terminal. The first information includes a periodicity of a periodic resource and a validity period of the periodic resource, and/or first indication information. The first indication information indicates the periodic resource or an aperiodic resource in the plurality of sidelink resources.

Certainly, the first information in this embodiment of this application is used to determine a periodicity and a validity period of each periodic resource in the plurality of sidelink resources, and/or an aperiodic resource in the plurality of sidelink resources.

It should be noted that there is a sidelink between the first terminal and the second terminal in this embodiment of this application. In this case, step 502 may be implemented in the following manner: The first terminal sends the first information to the second terminal on the sidelink. Correspondingly, the second terminal receives the first information from the first terminal on the sidelink resource. In this case, before step 501, the method provided in this embodiment of this application may further include: The first terminal establishes a sidelink with the second terminal. For a manner of establishing the sidelink between the first terminal and the second terminal, refer to descriptions in the conventional technology. Details are not described herein.

In a possible implementation, step 502 in this embodiment of this application may be implemented in the following manner: The first terminal sends a first message to the second terminal, and correspondingly, the second terminal receives the first message from the first terminal. The first message includes the first information. For example, the first message may be a physical sidelink shared channel (physical sidelink share channel, PSSCH) and/or a physical sidelink control channel (physical sidelink control channel, PSCCH).

Optionally, the first message may further include time domain locations of a plurality of sidelink resources. The time domain location is a time location at which a sidelink resource appears for the first time.

For example, the time domain location of the sidelink resource may be one or more of a slot (slot) of the sidelink resource, a subchannel (subchannel) number of the sidelink resource, a subframe (subframe) number of the sidelink resource, a length of the sidelink resource, a start moment (which may also be referred to as a start location) of the sidelink resource, or an end moment (which may also be referred to as an end location) of the sidelink resource. This is not limited in this embodiment of this application.

The "validity period" in this embodiment of this application may include one or more of a quantity of repetitions, valid duration, or an upper valid duration limit.

The valid duration may be determined based on a start moment (or referred to as a start location) of the valid duration and an end moment (or referred to as an end location) of the valid duration. Alternatively, the valid duration may be determined based on a start moment and a time length L of the valid duration. The valid duration carried in the first information may be a specific value, or may be indication information indicating the valid duration. This is not limited in this embodiment of this application.

The valid duration indicates a time period in which the sidelink resource recommended by the first terminal to the second terminal is valid. For example, valid duration of the sidelink resource a is the slot 1 to a slot 5. In this case, the second terminal may select the sidelink resource a to send data to the first terminal in the slot 1 to the slot 5, and in a slot other than the slot 1 to the slot 5, the sidelink resource a does not belong to a sidelink resource that is recommended by the first terminal to the second terminal and that can be used to receive data.

The upper valid duration limit indicates a valid deadline of a sidelink resource. For example, an upper valid duration limit of a sidelink resource b is a slot 6. In this case, before the slot 6 expires, the second terminal may select the sidelink resource b to send data to the first terminal, and after the timeslot 6 expires, the sidelink resource b does not belong to a sidelink resource that is recommended by the first terminal to the second terminal and that can be used to receive data.

In this embodiment of this application, different sidelink resources may have different upper valid duration limits. For example, the sidelink resource a and the sidelink resource b have same valid duration, that is, four slots. However, a start location of the sidelink resource a is the slot 1, and a start location of the sidelink resource b is the slot 2. In this case, an upper valid duration limit of the sidelink resource a is the slot 4, and an upper valid duration limit of the sidelink resource b is the slot 5. It may be understood that, if a periodicity of the sidelink resource a is one slot, each of the slot 1 to the slot 4 is the start location of the sidelink resource.

The quantity of repetitions in this embodiment of this application may be a quantity of repetitions of a periodicity of a periodic resource. The quantity of repetitions may be used to determine whether the periodic resource is valid. For example, if a repeated resource of a periodic resource a is k, the periodic resource a is invalid (not valid) after the k periodicities, and the periodic resource a is valid before the k periodicities, where k is an integer greater than or equal to 2.

That the sidelink resource is valid may mean that the sidelink resource recommended by the first terminal to the second terminal is valid within a time range corresponding to the sidelink resource. That the sidelink resource is invalid may mean that the sidelink resource recommended by the first terminal to the second terminal exceeds a recommended time range.

In a possible implementation, the valid duration in this embodiment of this application may be determined in the following manner:
Manner 1: A start moment of the valid duration is a moment at which the second terminal sends a trigger message, where the trigger message is used to trigger the first terminal to send the first information to the second terminal, or a start moment of the valid duration is a moment at which the second terminal sends a trigger message plus a time offset 1.

In Manner 1, coverage duration of the valid duration is the widest. If the trigger message fails to be received, the start moment of the valid duration can be updated in real time.

Manner 2: A start moment of the valid duration is a moment at which the first terminal sends the first information, or a start moment of the valid duration is a moment at which the first terminal sends the first information plus a time offset 2.

All moments after the first information is covered in Manner 2, and a validity period of a sidelink resource is provided based on the sending moment of the first information, and may be adjusted each time the first information is sent.

Manner 3: A start moment of the valid duration is a start moment of the earliest sidelink resource in the plurality of sidelink resources. For example, if the plurality of sidelink resources include a sidelink resource 1 and a sidelink resource 2, and a start moment of the sidelink resource 1 is earlier than a start moment of the sidelink resource 2, the start moment of the valid duration is the start moment of the sidelink resource 1 in the sidelink resource 1 and the sidelink resource 2. Alternatively, a start moment of the valid duration is a start moment of the earliest sidelink resource in the plurality of sidelink resources plus a time offset 3.

In Manner 3, the start moment of the earliest sidelink resource in the plurality of sidelink resources is used as the start moment of the valid duration, which conforms to time domain coverage of the sidelink resources.

Manner 4: A start moment of the valid duration is a start moment of a sidelink resource. To be specific, if start moments of different sidelink resources are different, start moments of valid duration of the different sidelink resources are different. Alternatively, a start moment of the valid duration is a start moment of a sidelink resource plus a time offset 4.

In Manner 4, valid duration of each sidelink resource is determined based on a start moment of each sidelink resource, and channel/interference variation statuses of different sidelink resources may be comprehensively considered.

Manner 5: A start moment of the valid duration is a start moment of the latest sidelink resource in the plurality of sidelink resources. For example, if the plurality of sidelink resources include a sidelink resource 1 and a sidelink resource 2, and a start moment of the sidelink resource 1 is earlier than a start moment of the sidelink resource 2, the start moment of the valid duration is the start moment of the sidelink resource 2 in the sidelink resource 1 and the sidelink resource 2. Alternatively, a start moment of the valid duration is a start moment of the latest sidelink resource in the plurality of sidelink resources plus a time offset 5.

A difference between Manner 5 and Manner 3 lies in that fewer sidelink resources are required for carrying duration, because calculation starts from the latest resource.

In a possible implementation, valid duration of a first sidelink resource in the plurality of sidelink resources is determined based on an end moment of the first sidelink resource and a start moment of the first sidelink resource. The first sidelink resource is any one of the plurality of sidelink resources. Herein, the first sidelink resource is merely used as an example for description, and does not have any indicative meaning. For a manner of determining valid duration of the remaining sidelink resources other than the first sidelink resource in the plurality of sidelink resources, refer to the manner of determining the valid duration of the first sidelink resource. Details are not described herein.

The end moment of the first sidelink resource may be understood as a location at which the first sidelink resource appears for the last time, that is, a location at which the first sidelink resource appears for the last time after N repetitions.

In a possible implementation, a quantity of repetitions of any periodic resource in the plurality of sidelink resources is determined based on valid duration of the periodic resource and a periodicity of the periodic resource.

For example, a quantity of repetitions of the first sidelink resource may be determined by dividing valid duration by a periodicity. For example, the quantity of repetitions is a quotient obtained by dividing the valid duration by the periodicity, that is, the quantity k of repetitions = L1/T1. L1 indicates the valid duration, and T1 indicates the periodicity. Alternatively, the quantity of repetitions is a parameter obtained after a quotient obtained by dividing the valid duration by the periodicity is rounded up or rounded down. Alternatively, the quantity of repetitions is determined based on a preset value and a parameter obtained after a quotient obtained by dividing the valid duration by a first periodicity is rounded up or rounded down. The preset value may be 1, 2, or another parameter value. This is not limited in this embodiment of this application. For any manner of determining the quantity of repetitions based on the valid duration and the periodicity or any manner of determining the quantity of repetitions in the following, refer to the descriptions herein. Details are not described subsequently.

In a possible implementation, a quantity of repetitions of any periodic resource is obtained by dividing valid duration of the periodic resource by a periodicity of the periodic resource and performing rounding.

In a possible implementation, the aperiodic resource in this embodiment of this application may alternatively correspond to one piece of valid duration. In other words, the first information may be further used to indicate the valid duration of the aperiodic resource. This helps determine a time period in which the aperiodic resource is valid, or indicate that the aperiodic resource becomes invalid after a time point indicated by an upper valid duration limit, or indicate that the aperiodic resource is valid before a time point corresponding to an upper valid duration limit.

For example, the second terminal may be the terminal 20 in FIG. 1.

In a possible implementation, valid duration of any periodic resource in the plurality of sidelink resources is determined based on a quantity of repetitions of the periodic resource and a periodicity of the periodic resource. For example, the valid duration of the periodic resource is greater than or equal to a parameter obtained by multiplying the quantity of repetitions of the sidelink resource by the periodicity.

It should be noted that in this embodiment of this application, start moments of different sidelink resources are different, but the different sidelink resources may have same valid duration. Start moments of different sidelink resources are the same, but the different sidelink resources may have different valid duration. This is not limited in this embodiment of this application.

In a possible embodiment, the first information in this embodiment of this application may alternatively be replaced with the following content: The first information includes identification information of the plurality of sidelink resources and one or more index values. The index value is used to determine a periodicity and/or a validity period of each periodic resource. It may be understood that the second terminal has a periodicity and/or a validity period associated with each index value. For example, the first information includes identification information of the sidelink resource 1, identification information of the sidelink resource 2, and an index value 1, and the index value 1 is associated with a periodicity 1 and a validity period 1 on the second terminal. In this case, the second terminal may determine that periodicities of the sidelink resource 1 and the sidelink resource 2 are the periodicity 1, and validity periods of the sidelink resource 1 and the sidelink resource 2 are the validity period 1. For example, the first information includes identification information of the sidelink resource 1, an index value 1 associated with the sidelink resource 1, identification information of the sidelink resource 2, and an index value 2 associated with the sidelink resource 2, and the index value 2 is associated with a periodicity 2 and a validity period 2 on the second terminal. In this case, the second terminal may determine that a periodicity of the sidelink resource 1 is the periodicity 1, a validity period of the sidelink resource 1 is the validity period 1, a periodicity of the sidelink resource 2 is the periodicity 2, and a validity period of the sidelink resource 2 is the validity period 2.

It may be understood that a mapping relationship between each index value and each of a periodicity and a validity period that exists on the second terminal may be determined by the first terminal and the second terminal through negotiation, or may be determined by the second terminal and then sent to the first terminal. Certainly, the mapping relationship may alternatively be determined by the first terminal and then sent to the second terminal, or may be predefined in a protocol. This is not limited in this embodiment of this application.

Step 503: The second terminal determines the aperiodic resource in the plurality of sidelink resources based on the first information.

Step 504: The second terminal determines a periodicity and a validity period of each periodic resource in the plurality of sidelink resources based on the first information.

It should be noted that, if each of the plurality of sidelink resources is an aperiodic resource, step 504 may be omitted, and correspondingly, content such as a periodicity and a validity period of a periodic resource in the first information may be omitted. If each of the plurality of sidelink resources is a periodic resource, step 503 may be omitted, and correspondingly, the first indication information in the first information does not have a function of indicating an aperiodic resource. If the plurality of sidelink resources include both an aperiodic resource and a periodic resource, step 504 and step 503 need to be reserved, and correspondingly, the first information includes both the first indication information and content such as a periodicity and a validity period of the periodic resource. In addition, in this embodiment of this application, step 503 and step 504 are not subject to a specific sequence.

It should be noted that, if the plurality of sidelink resources include both an aperiodic resource and a periodic resource, indication information indicating the aperiodic resource and content such as a periodicity and a validity period of the periodic resource may be carried in different information. In this embodiment of this application, an example in which the two pieces of information are carried in the first information is used.

In a possible implementation, when the first information is further used to indicate valid duration of the aperiodic resource, the second terminal may further determine the valid duration of the aperiodic resource. In this case, the first information may include the valid duration or an upper valid duration limit of the aperiodic resource.

It should be noted that valid duration of different aperiodic resources in the plurality of sidelink resources may be different, so that the second terminal flexibly selects an aperiodic resource to transmit data to the first terminal. Valid duration of different aperiodic resources in the plurality of sidelink resources may alternatively be the same.

In a possible embodiment, after step 504 or step 503, the method provided in this embodiment of this application may further include: The second terminal determines a target sidelink resource from the plurality of sidelink resources based on the first information. The second terminal sends data to the first terminal on the target sidelink resource, and correspondingly, the first terminal receives the data from the second terminal on the target sidelink resource.

For example, that the second terminal determines a target sidelink resource from the plurality of sidelink resources based on the first information may be implemented in the following manner: When the second terminal has a data transmission requirement, the second terminal determines a resource selection window (that is, a time period, which may also be referred to as a time window). The second terminal selects, from the plurality of sidelink resources, sidelink resources located in the selection window. The second terminal selects the target sidelink resource from the sidelink resources located in the selection window.

For example, that the second terminal selects the target sidelink resource from the sidelink resources located in the selection window includes: The second terminal senses channel usage in the selection window in a time period (that is, a sensing window) before the selection window. If a channel is occupied and a signal is higher than a threshold on a sidelink resource in the plurality of sidelink resources carried in the first information, the sidelink resource is excluded, or otherwise, the sidelink resource is used as a to-be-selected resource. Optionally, the second terminal randomly selects and determines, from to-be-selected resources, the target sidelink resource used to transmit data.

For example, the plurality of sidelink resources include the sidelink resource 1 to a sidelink resource 4. If the sidelink resource 2 to the sidelink resource 4 are located in the selection window, the second terminal may select the target sidelink resource from the sidelink resource 2 to the sidelink resource 4.

For example, if the data sent by the second terminal to the first terminal is an aperiodic service, and the sidelink resource 3 in the sidelink resource 2 to the sidelink resource 4 is an aperiodic resource, the second terminal may determine that the sidelink resource 3 is the target sidelink resource.

For another example, if the data sent by the second terminal to the first terminal is an aperiodic service, both the sidelink resource 3 and the sidelink resource 4 in the sidelink resource 2 to the sidelink resource 4 are aperiodic resources, and both the sidelink resource 3 and the sidelink resource 4 are to-be-selected sidelink resources, the second terminal may randomly select a sidelink resource from the sidelink resource 3 and the sidelink resource 4, to transmit data to the first terminal.

In the foregoing solution, the first terminal sends the first information to the second terminal, the first information includes the periodicity and the validity period of the periodic resource in the plurality of sidelink resources, and/or the first indication information, and the first indication information indicates the periodic resource or the aperiodic resource in the plurality of sidelink resources. Therefore, the second terminal determines the validity period and the periodicity of the periodic resource in the plurality of sidelink resources, and determines the aperiodic resource in the plurality of sidelink resources based on the first information, to implement a scenario in which a sidelink resource recommended by the first terminal to the second terminal is not limited to a periodic resource. In addition, the validity period of the periodic resource helps the second terminal determine a time period in which the periodic resource is valid and a moment after which the periodic resource becomes invalid. In this solution, when the first terminal does not know a data transmission requirement moment of the second terminal, the validity period is configured for the periodic resource in the plurality of sidelink resources and the aperiodic resource in the plurality of sidelink resources is indicated, so that the second terminal can more easily match a data transmission requirement moment of a sender terminal when performing data transmission. This improves reliability that the first information assists the second terminal in selecting a sidelink resource.

When the plurality of sidelink resources include a periodic resource and an aperiodic resource, content of the first information is different. The following separately describes the content.

Case (1): Each of the plurality of sidelink resources is a periodic resource.

In Case (1), content of the first information may be shown in Example (1).

Example (1): The periodicity and the validity period included in the first information is applicable to each of the plurality of sidelink resources. In other words, the plurality of sidelink resources have a same periodicity and a same validity period.

It may be understood that, in Example (1), in addition to the same periodicity, the plurality of sidelink resources further have a same quantity of repetitions, same valid duration, and a same upper valid duration limit. As shown in FIG. 6, a periodicity of each of the sidelink resource 1 to a sidelink resource 7 is the periodicity 1, and an example in which the quantity of repetitions is 2 is used in FIG. 6. With reference to FIG. 6, in a case of the same periodicity and the same quantity of repetitions, the sidelink resource 1 to the sidelink resource 7 have same valid duration. For example, a start moment of valid duration of any sidelink resource is a start moment of the sidelink resource. It can be learned from FIG. 6 that, because start moments of valid duration of sidelink resources are different, end moments of the sidelink resources are different.

In an optional example, the first information may further include identification information of the plurality of sidelink resources. Identification information of any sidelink resource is used to identify the sidelink resource. For example, the identification information of the sidelink resource may be one or more of an identifier of the sidelink resource and/or a time domain location of the sidelink resource. For example, the identifier of the sidelink resource may be a number of the sidelink resource.

It may be understood that, if the first message includes time domain locations of the plurality of sidelink resources, the first information may not carry the identification information of the plurality of sidelink resources.

If the time domain locations of the plurality of sidelink resources and the first information are carried in different messages, the first information may include the identification information of the plurality of sidelink resources.

For example, the validity period in this embodiment of this application includes valid duration. The following describes, with reference to Example (1.1) and Example (1.2), content of the first information when the validity period includes the valid duration. In this case, the valid duration is not only used to determine common valid duration of the plurality of sidelink resources, but also used to determine a common quantity of repetitions of the plurality of sidelink resources.

For example, information used to determine the valid duration may be the valid duration. Alternatively, information used to determine the valid duration includes a start moment of the valid duration and an end moment of the valid duration, or information used to determine the valid duration includes a start moment of the valid duration and a time length of the valid duration.

For another example, the validity period in this embodiment of this application includes valid duration and a quantity of repetitions. The following describes, with reference to Example (1.3) and Example (1.4), content of the first information when the validity period includes the valid duration and the quantity of repetitions.

For example, with reference to Example (1.1) to Example (1.4), the following specifically describes Example (1) by using an example in which the plurality of sidelink resources include the sidelink resource 1 to a sidelink resource n, the periodicity is T1, and the valid duration is L1, where n is an integer greater than or equal to 2.

Example (1.1): As shown in Table 1.1, content of the first information may be shown in Table 1.1.

**Table 1.1**

| Identification information | Valid duration | Periodicity |
|---|---|---|
| Resource 1 | L1 | T1 |
| Resource 2 | | |
| ... | | |
| Resource n | | |

Example (1.2): Example (1.1) shows the content of the first information in a form of a table. For another example, the first information in this embodiment of this application may alternatively be implemented in the following manner: (sidelink resource 1, sidelink resource 2, ..., sidelink resource n, T1, L1).

With reference to Example (1.1) and Example (1.2), in step 504 in this embodiment of this application, that the second terminal determines a periodicity and a validity period of each of the plurality of sidelink resources based on the first information may be implemented in the following manner: The second terminal determines the periodicity in the first information as the periodicity of each of the plurality of sidelink resources, and determines the valid duration in the first information as the valid duration of each of the plurality of sidelink resources. In addition, when the first information does not include the quantity of repetitions, the second terminal may further determine the quantity of repetitions of each sidelink resource based on the valid duration and the periodicity.

With reference to Example (1.1) and Example (1.2), for example, the second terminal may determine, based on the first information, that common valid duration of the sidelink resource 1 to the sidelink resource n is L1, that is, valid duration of any one of the sidelink resource 1 to the sidelink resource n is L1. The second terminal may determine, based on the first information, that a periodicity of any one of the sidelink resource 1 to the sidelink resource n is T1. In addition, the second terminal may further determine a quantity k of repetitions of each of the plurality of sidelink resources.

In Example (1.1) and Example (1.2), the first information does not carry the quantity of repetitions, but the second terminal determines the quantity of repetitions based on the valid duration and the periodicity. In this way, signaling overheads of sending the first information by the first terminal to the second terminal can be reduced.

Example (1.3): As shown in Table 1.2, content of the first information may be shown in Table 1.2.

**Table 1.2**

| Identification information | Periodicity | Valid duration | Quantity of repetitions |
|---|---|---|---|
| Sidelink resource 1 | T1 | L1 | k1 |
| Sidelink resource 2 | | | |
| ... | | | |
| Sidelink resource n | | | |

Example (1.4): Example (1.3) shows the content of the first information in a form of a table. For another example, the first information in this embodiment of this application may alternatively be implemented in the following manner: (sidelink resource 1, sidelink resource 2, ..., sidelink resource n, T1, L1, k1). L1 represents the valid duration, T1 represents the periodicity, and k1 represents the quantity of repetitions.

A difference between Example (1.3) and Example (1.4) and Example (1.1) and Example (1.2) lies in that the first information in Example (1.3) and Example (1.4) includes the quantity of repetitions, but the first information in Example (1.1) and Example (1.2) does not include the quantity of repetitions. In this case, in Example (1.3) and Example (1.4), the second terminal may determine the quantity k1 of repetitions carried in the first information as the quantity of repetitions of each of the plurality of sidelink resources. In this way, a process in which the second terminal calculates the quantity of repetitions is omitted.

Similarly, if the first information includes the quantity of repetitions, the first terminal may also calculate the quantity of repetitions in the manners described in Example (1.1) and Example (1.2). This is not limited in this embodiment of this application.

Example (1.1) to Example (1.4) are described by using an example in which the plurality of sidelink resources share a same validity period and a same periodicity. The following describes, with reference to Case 1 by using Example 2 as an example, an example in which each sidelink resource is independently associated with a periodicity or each sidelink resource is associated with a validity period.

Example 2: The periodicity included in the first information includes a periodicity of each of the plurality of sidelink resources. The validity period included in the first information includes a validity period of each sidelink resource.

For example, the validity period in Example 2 includes valid duration and a quantity of repetitions. The following describes, with reference to Example (2.1) and Example (2.2), content of the first information when the validity period includes the valid duration and the quantity of repetitions.

For another example, the validity period in Example 2 includes valid duration. The following describes, with reference to Example (2.3) and Example (2.4), content of the first information when the validity period includes the valid duration and the quantity of repetitions.

For example, with reference to Example (2.1) to Example (2.4), the following specifically describes Example 2 by using an example in which the plurality of sidelink resources include the sidelink resource 1 to a sidelink resource n, where n is an integer greater than or equal to 2.

Example (2.1): As shown in Table 1.3, content of the first information may be shown in Table 1.3.

**Table 1.3**

| Identification information | Periodicity | Valid duration | Quantity of repetitions |
|---|---|---|---|
| Sidelink resource 1 | Periodicity 1 | L1 | k1 |
| Sidelink resource 2 | Periodicity 2 | L2 | k2 |
| ... | | | |
| Sidelink resource n | Periodicity n | Ln | kn |

Example (2.2): Example (2.1) shows the content of the first information in a form of a table. For another example, the first information in this embodiment of this application may alternatively be implemented in the following manner: {(sidelink resource 1, L1, periodicity 1, k1), (sidelink resource 2, L2, periodicity 2, k2), ..., (sidelink resource n, Ln, periodicity n, kn)}. That is, the first information includes a periodicity, valid duration, and a quantity of repetitions that are associated with each sidelink resource.

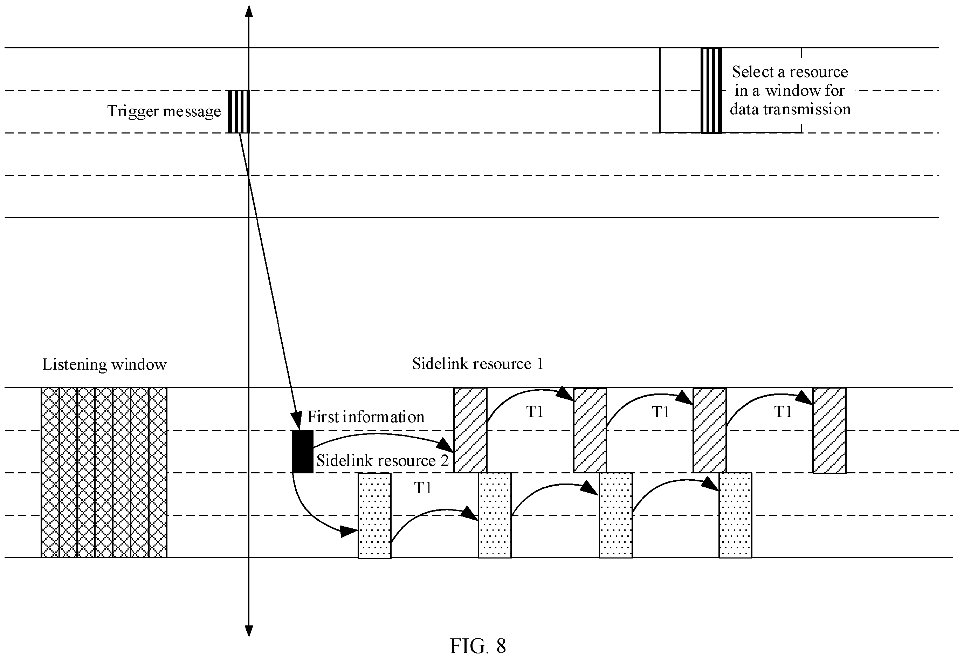

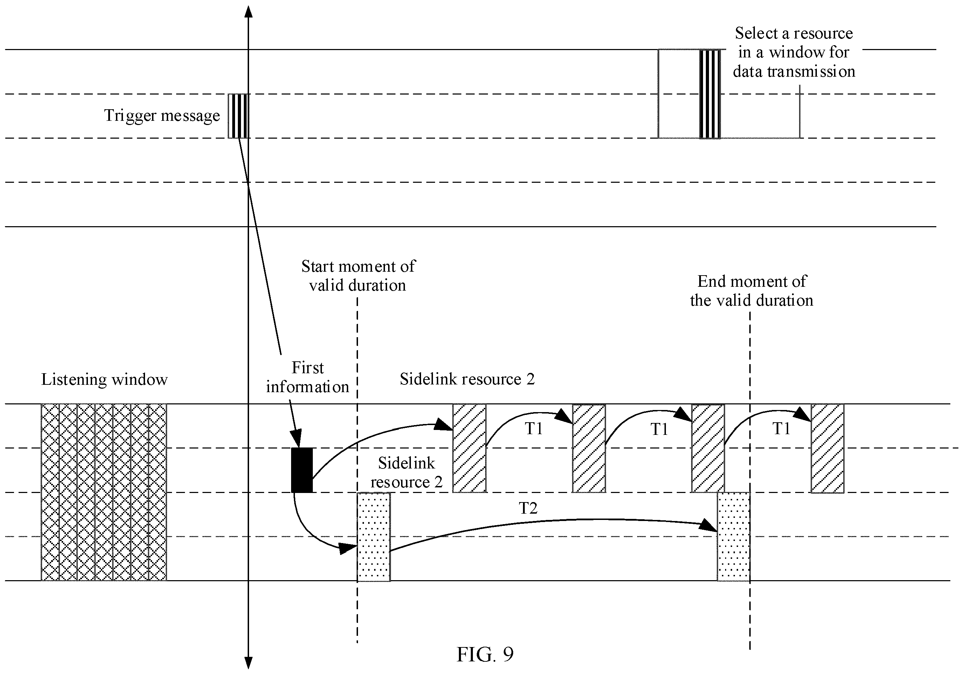

For example, as shown in FIG. 8, periodicities of both the sidelink resource 1 and the sidelink resource 2 are T1. In FIG. 8, an example in which quantities k1 of repetitions of the sidelink resource 1 and the sidelink resource 2 are 4 is used. As shown in FIG. 9, a periodicity of each sidelink resource 1 is T1, and a periodicity of each sidelink resource 2 is T2. In FIG. 9, an example in which a quantity k1 of repetitions of the sidelink resource 1 is 4, and a quantity k2 of repetitions of the sidelink resource 2 is 2 is used. In FIG. 8 and FIG. 9, start moments of the sidelink resource 1 and the sidelink resource 2 are different. If the sidelink resource 1 and the sidelink resource 2 have same valid duration, but a start moment (which is the start moment of the sidelink resource 1) of the valid duration of the sidelink resource 1 is different from a start moment (which is the start moment of the sidelink resource 2) of the valid duration of the sidelink resource 2, an end moment of the valid duration of the sidelink resource 1 is different from an end moment of the valid duration of the sidelink resource 2. If the sidelink resource 1 and the sidelink resource 2 have same valid duration, and both a start moment of the valid duration of the sidelink resource 1 and a start moment of the valid duration of the sidelink resource 2 are a start moment of the sidelink resource 2, an end moment of the valid duration of the sidelink resource 1 is the same as an end moment of the valid duration of the sidelink resource 2.

It should be noted that, in Example (2.1) to Example (2.4), when each sidelink resource is independently associated with a periodicity, the sidelink resources may have a same periodicity. For example, the periodicity 1 to the periodicity n are the same. Alternatively, the sidelink resources may have different periodicities. That the sidelink resources have different periodicities may mean that all of the plurality of sidelink resources have different periodicities (for example, if n is 3, the periodicity 1, the periodicity 2, and the periodicity 3 are different). Alternatively, that the sidelink resources have different periodicities may mean that some of the plurality of sidelink resources have a same periodicity, but some of the sidelink resources have different periodicities. For example, if n is 3, the periodicity 1 and the periodicity 2 are the same, but the periodicity 3 and the periodicity 1 are different.

When each sidelink resource is independently associated with a quantity of repetitions, the sidelink resources may have a same quantity of repetitions. For example, if n is 3, k1, k2, and k3 are equal, for example, 5. Alternatively, the sidelink resources may have different quantities of repetitions. That the sidelink resources have different quantities of repetitions may mean that all of the plurality of sidelink resources have different quantities of repetitions (for example, if n is 3, k1, k2, and k3 are different).

When each sidelink resource is independently associated with valid duration, the sidelink resources may have same valid duration. For example, if n is 3, L1, L2, and L3 are equal, for example, 10 ms. Alternatively, the sidelink resources may have different valid duration. That the sidelink resources have different valid duration may mean that all of the plurality of sidelink resources have different valid duration (for example, if n is 3, L1, L2, and L3 are different). Alternatively, that the sidelink resources have different valid duration may mean that some of the plurality of sidelink resources have same valid duration, but some of the sidelink resources have different valid duration. For example, if n is 3, L1 and L2 are the same, but L3 and L1 are different.

In this case, in Example (2.1) and Example (2.2), step 504 in this embodiment of this application may be implemented in the following manner: The second terminal determines a periodicity associated with each sidelink resource as the periodicity of the sidelink resource. Alternatively, the second terminal determines a quantity of repetitions associated with each sidelink resource as the quantity of repetitions of each sidelink resource, and determines valid duration associated with each sidelink resource as the valid duration of each sidelink resource.

For example, with reference to Table 1.3, the second terminal determines that the periodicity 1 is the periodicity of the sidelink resource 1, determines that L1 is the valid duration of the sidelink resource 1, and determines that k1 is the quantity of repetitions of the sidelink resource 1.

When each of the plurality of sidelink resources is independently associated with a periodicity, if the plurality of sidelink resources have same valid duration or a same quantity of repetitions, content of the first information may be shown in Table 1.4 to Table 1.6.

**Table 1.4**

| Identification information | Periodicity | Valid duration | Quantity of repetitions |
|---|---|---|---|
| Sidelink resource 1 | Periodicity 1 | L | k1 |
| Sidelink resource 2 | Periodicity 2 | | k2 |
| ... | ... | | ... |
| Sidelink resource n | Periodicity n | | kn |

The foregoing shows the content of the first information in a form of Table 1.4. For another example, the first information in this embodiment of this application may alternatively be implemented in the following manner: ((sidelink resource 1, periodicity 1, k1), (sidelink resource 2, periodicity 2, k2), ..., (sidelink resource n, periodicity n, kn), L).

The periodicity 1 to the periodicity n in Table 1.4 to Table 1.6 may be the same or different. For example, with reference to Table 1.4, the second terminal may determine that the periodicity of the sidelink resource 1 is the periodicity 1 and the quantity of repetitions of the sidelink resource 1 is k1, the periodicity of the sidelink resource 2 is the periodicity 2 and the quantity of repetitions of the sidelink resource 2 is k2, and the periodicity of the sidelink resource 3 is the periodicity 3 and the quantity of repetitions of the sidelink resource 3 is k3. By analogy, the second terminal determines that the periodicity of the sidelink resource n is the periodicity n and the quantity of repetitions of the sidelink resource n is kn. In addition, the second terminal may determine, with reference to Table 1.4, that the sidelink resource 1 to the sidelink resource n all have the valid duration L. It should be noted that, if two sidelink resources have a same periodicity and same valid duration, the two sidelink resources have a same quantity of repetitions.

**Table 1.5**

| Identification information | Periodicity | Quantity of repetitions | Valid duration |
|---|---|---|---|
| Sidelink resource 1 | Periodicity 1 | k | L1 |
| Sidelink resource 2 | Periodicity 2 | | L2 |
| ... | ... | | ... |
| Sidelink resource n | Periodicity n | | Ln |

The foregoing shows the content of the first information in a form of Table 1.5. For another example, the first information in this embodiment of this application may alternatively be implemented in the following manner: ((sidelink resource 1, periodicity 1, L1), (sidelink resource 2, periodicity 2, L2), ..., (sidelink resource n, periodicity n, Ln), k). Herein, k is applicable to the sidelink resource 1 to the sidelink resource n.

For example, with reference to Table 1.5, the second terminal may determine that the periodicity of the sidelink resource 1 is the periodicity 1 and the valid duration of the sidelink resource 1 is L1, the periodicity of the sidelink resource 2 is the periodicity 2 and the valid duration of the sidelink resource 2 is L2, and the periodicity of the sidelink resource 3 is the periodicity 3 and the valid duration of the sidelink resource 3 is L3. By analogy, the second terminal determines that the periodicity of the sidelink resource n is the periodicity n and the valid duration of the sidelink resource n is Ln. In addition, the second terminal may determine, with reference to Table 1.5, that the quantities of repetitions of the sidelink resource 1 to the sidelink resource n are the same and are all k.

**Table 1.6**

| Identification information | Periodicity | Valid duration | Quantity of repetitions |
|---|---|---|---|
| Sidelink resource 1 | Periodicity 1 | L | k |
| Sidelink resource 2 | Periodicity 2 | | |
| ... | ... | | |
| Sidelink resource n | Periodicity n | | |

The foregoing shows the content of the first information in a form of Table 1.6. For another example, the first information in this embodiment of this application may alternatively be implemented in the following manner: ((sidelink resource 1, periodicity 1), (sidelink resource 2, periodicity 2), ..., (sidelink resource n, periodicity n), L, K). Herein, L and k are applicable to the sidelink resource 1 to the sidelink resource n.

For example, with reference to Table 1.6, the second terminal may determine that the periodicity of the sidelink resource 1 is the periodicity 1, the periodicity of the sidelink resource 2 is the periodicity 2, and the periodicity of the sidelink resource 3 is the periodicity 3. By analogy, the second terminal determines that the periodicity of the sidelink resource n is the periodicity n. In addition, the second terminal may determine, with reference to Table 1.6, that the quantities of repetitions of the sidelink resource 1 to the sidelink resource n are the same and are all k, and the valid duration of the sidelink resource 1 to the valid duration of the sidelink resource n are the same and are all L.

For example, when each of the plurality of sidelink resources is independently associated with a quantity of repetitions or valid duration, if the plurality of sidelink resources have a same periodicity, content of the first information may be shown in Table 1.7.

**Table 1.7**

| Identification information | Periodicity | Valid duration | Quantity of repetitions |
|---|---|---|---|
| Sidelink resource 1 | T | L1 | k1 |
| Sidelink resource 2 | | L2 | k2 |
| ... | | ... | ... |
| Sidelink resource n | | L4 | kn |

The foregoing shows the content of the first information in a form of Table 1.7. For another example, the first information in this embodiment of this application may alternatively be implemented in the following manner: ((sidelink resource 1, k1, L1), (sidelink resource 2, k2, L2), ..., (sidelink resource n, kn, Ln), T). Herein, T is applicable to the sidelink resource 1 to the sidelink resource n.

For example, with reference to Table 1.7, the second terminal may determine that the periodicities of the sidelink resource 1 to the sidelink resource n are the same and are all T, but the valid duration of the sidelink resource 1 is L1 and the quantity of repetitions of the sidelink resource 1 is k1, and the valid duration of the sidelink resource 2 is L2 and the quantity of repetitions of the sidelink resource 2 is k2. By analogy, the second terminal determines that the valid duration of the sidelink resource n is Ln and the quantity of repetitions of the sidelink resource n is kn.

If some of the plurality of sidelink resources have a same periodicity, and some of the sidelink resources have different periodicities, in the first information, sidelink resources with a same periodicity may be associated with a same periodicity, and sidelink resources with different periodicities each may be associated with a periodicity. In this case, the first terminal may choose to associate each sidelink resource with valid duration and a quantity of repetitions, or may choose to associate sidelink resources that have a same periodicity and same valid duration with same valid duration and a same quantity of repetitions. As shown in Table 1.8, T1, T2, and Tn in Table 1.8 are different. In Table 1.8, an example in which the first terminal may choose to associate each sidelink resource with valid duration and a quantity of repetitions is used.

**Table 1.8**

| Identification information | Periodicity | Valid duration | Quantity of repetitions |
|---|---|---|---|
| Sidelink resource 1 | T1 | L1 | k1 |
| Sidelink resource 2 | | L2 | k2 |
| Sidelink resource 3 | T2 | L3 | k3 |
| Sidelink resource 4 | | | |
| ... | ... | ... | ... |
| Sidelink resource n | Tn | L4 | kn |

The foregoing shows the content of the first information in a form of Table 1.8. For another example, the first information in this embodiment of this application may alternatively be implemented in the following manner: {((sidelink resource 1, k1, L1), (sidelink resource 2, k2, L2), T1), ..., ((sidelink resource n, kn, L4), Tn)}. Herein, T1 is applicable to the sidelink resource 1 and the sidelink resource 2. T2 is applicable to the sidelink resource 3 and the sidelink resource 4.

In this case, with reference to Table 1.8, the second terminal may determine that the periodicities of the sidelink resource 1 and the sidelink resource 2 are the same and are T1, but the valid duration of the sidelink resource 1 is L1 and the quantity of repetitions of the sidelink resource 1 is k1, and the valid duration of the sidelink resource 2 is L2 and the quantity of repetitions of the sidelink resource 2 is k2. The second terminal may determine that the periodicities of the sidelink resource 3 and the sidelink resource 4 are the same and are T2, the valid duration of the sidelink resource 3 and the valid duration of the sidelink resource 4 are L3 and the quantity of repetitions of the sidelink resource 3 and the quantity of repetitions of the sidelink resource 4 are k3, and so on, until the validity period and the periodicity of the sidelink resource n are determined. It should be noted that, in Table 1.8, an example in which the sidelink resource 3 and the sidelink resource 4 have same valid duration and a same periodicity, but the sidelink resource 3 and the sidelink resource 4 are associated with a same quantity of repetitions is used. However, in an actual process, the sidelink resource 3 and the sidelink resource 4 each may be associated with a quantity of repetitions, and the quantities of repetitions associated with the sidelink resource 3 and the sidelink resource 4 are the same.

The first information not only carries the periodicity and the valid duration, but also carries the quantity of repetitions. In an actual process, the first information may not carry the quantity of repetitions. In this case, the quantity of repetitions in the examples shown in Example (2.1) and Example (2.2) may be omitted. When the first information does not carry the quantity of repetitions, content of the first information is shown in Example (2.3) or Example (2.4):

Example (2.3): As shown in Table 1.9, content of the first information may be shown in Table 1.9.

**Table 1.9**

| Identification information | Periodicity | Valid duration |
|---|---|---|
| Sidelink resource 1 | Periodicity 1 | L1 |
| Sidelink resource 2 | Periodicity 2 | L2 |
| Sidelink resource n | Periodicity n | Ln |

Example (2.4): Example (2.3) shows the content of the first information in a form of a table. For another example, the first information in this embodiment of this application may alternatively be implemented in the following manner: {(sidelink resource 1, L1, periodicity 1), (sidelink resource 2, L2, periodicity 2), ..., (sidelink resource n, valid duration n, periodicity n)}. That is, the first information includes a periodicity, valid duration, and a quantity of repetitions of each sidelink resource.

In this case, in Example (2.3) and Example (2.4), step 504 in this embodiment of this application may be implemented in the following manner: The second terminal uses a periodicity of each of the plurality of sidelink resources as the periodicity of the sidelink resource. The second terminal determines valid duration associated with each sidelink resource as the valid duration of the sidelink resource, and the second terminal determines the quantity of repetitions of the first sidelink resource based on the valid duration of the first sidelink resource and the periodicity of the first sidelink resource. The first sidelink resource is any one of the plurality of sidelink resources, and has no indicative meaning. For manners of determining a periodicity, a quantity of repetitions, and valid duration of a sidelink resource other than the first sidelink resource in the plurality of sidelink resources, refer to a processing process of the first sidelink resource. Details are not described in this embodiment of this application. For a manner of determining the quantity of repetitions based on the valid duration and the periodicity, refer to the descriptions in Example (1.3) and Example (1.4). Details are not described herein.

For example, with reference to Example (2.3) and Example (2.4), the second terminal determines that the periodicity of the sidelink resource 1 is the periodicity 1, and the valid duration of the sidelink resource 1 is L1. In addition, the second terminal may further determine the quantity of repetitions of the sidelink resource 1 based on the periodicity 1 of the sidelink resource 1 and the valid duration L 1 of the sidelink resource 1.

When each of the plurality of sidelink resources is independently associated with a periodicity, if the plurality of sidelink resources have same valid duration, content of the first information may be shown in Table 1.10 and Table 1.11.

**Table 1.10**

| Identification information | Periodicity | Valid duration |
|---|---|---|
| Sidelink resource 1 | Periodicity 1 | L |
| Sidelink resource 2 | Periodicity 2 | |
| ... | ... | |
| Sidelink resource n | Periodicity n | |

The foregoing shows the content of the first information in a form of Table 1.10. For another example, the first information in this embodiment of this application may alternatively be implemented in the following manner: ((sidelink resource 1, periodicity 1), (sidelink resource 2, periodicity 2), ..., (sidelink resource n, periodicity n), L). Herein, L is applicable to the sidelink resource 1 to the sidelink resource n.

The periodicity 1 to the periodicity n in Table 1.10 to Table 1.12 may be the same or different. For example, with reference to Table 1.10, the second terminal may determine that the periodicity of the sidelink resource 1 is the periodicity 1, the periodicity of the sidelink resource 2 is the periodicity 2, and the periodicity of the sidelink resource 3 is the periodicity 3. By analogy, the second terminal determines that the periodicity of the sidelink resource n is the periodicity n. The second terminal may determine, with reference to Table 1.10, that the sidelink resource 1 to the sidelink resource n all have the valid duration L. In addition, the second terminal may determine a quantity of repetitions of any one of the sidelink resource 1 to the sidelink resource n based on a periodicity and valid duration L of the sidelink resource.

For example, when each of the plurality of sidelink resources is independently associated with valid duration, if the plurality of sidelink resources have a same periodicity, content of the first information may be shown in Table 1.11.

**Table 1.11**

| Identification information | Periodicity | Valid duration |
|---|---|---|
| Sidelink resource 1 | T | L1 |
| Sidelink resource 2 | | L2 |
| ... | | ... |
| Sidelink resource n | | Ln |

The foregoing shows the content of the first information in a form of Table 1.11. For another example, the first information in this embodiment of this application may alternatively be implemented in the following manner: ((sidelink resource 1, L1), (sidelink resource 2, L2), ..., (sidelink resource n, Ln), T). Herein, T is applicable to the sidelink resource 1 to the sidelink resource n.

For example, with reference to Table 1.11, the second terminal may determine that the periodicities of the sidelink resource 1 to the sidelink resource n are the same and are all T, the valid duration of the sidelink resource 1 is L1 and the quantity of repetitions of the sidelink resource 2 is determined based on L1 and T, and the valid duration of the sidelink resource 2 is L2 and the quantity of repetitions of the sidelink resource 2 is determined based on L2 and T. By analogy, the second terminal determines that the valid duration of the sidelink resource n is Ln and the quantity of repetitions of the sidelink resource n is determined based on Ln and T.

If some of the plurality of sidelink resources have a same periodicity, and some of the sidelink resources have different periodicities, in the first information, sidelink resources with a same periodicity may be associated with a same periodicity, and sidelink resources with different periodicities each may be associated with a periodicity. In this case, the first terminal may choose to associate each sidelink resource with valid duration, or may choose to associate sidelink resources that have a same periodicity and same valid duration with same valid duration. As shown in Table 1.12, T1, T2, and Tn in Table 1.12 are different. In Table 1.12, an example in which the first terminal may choose to associate sidelink resources that have a same periodicity with a same periodicity, but associate each sidelink resource with valid duration is used.

**Table 1.12**

| Identification information | Periodicity | Valid duration |
|---|---|---|
| Sidelink resource 1 | T1 | L1 |
| Sidelink resource 2 | | L2 |
| Sidelink resource 3 | T2 | L3 |
| Sidelink resource 4 | | |
| ... | ... | ... |
| Sidelink resource n | Tn | L4 |

The foregoing shows the content of the first information in a form of Table 1.12. For another example, the first information in this embodiment of this application may alternatively be implemented in the following manner: {((sidelink resource 1, L1), (sidelink resource 2, L2), T1), ..., ((sidelink resource n, L4), Tn)}. Herein, T1 is applicable to the sidelink resource 1 and the sidelink resource 2. T2 is applicable to the sidelink resource 3 and the sidelink resource 4.

In this case, with reference to Table 1.12, the second terminal may determine that the periodicities of the sidelink resource 1 and the sidelink resource 2 are the same and are T1, but the valid duration of the sidelink resource 1 is L1 and the quantity of repetitions of the sidelink resource 1 is determined based on T1 and L1. The second terminal may determine that the valid duration of the sidelink resource 2 is L2 and the quantity of repetitions of the sidelink resource 2 is determined based on T1 and L2. The second terminal may determine that the periodicities of the sidelink resource 3 and the sidelink resource 4 are the same and are T2, and the valid duration of the sidelink resource 3 and the valid duration of the sidelink resource 4 are L3. The quantities of repetitions of the sidelink resource 3 and the sidelink resource 4 are determined based on T2 and L3, and so on, until the validity period and the periodicity of the sidelink resource n are determined. It should be noted that, in Table 1.12, the sidelink resource 3 and the sidelink resource 4 have same valid duration and a same periodicity.

It should be noted that, in Example (2.1) to Example (2.4), when the periodicities of the sidelink resource 1 to the sidelink resource n are the same and are all T, if some of the sidelink resource 1 to the sidelink resource n have same valid duration but some sidelink resources have different valid duration, a plurality of sidelink resources with same valid duration may be associated with same valid duration.

It should be noted that, when the plurality of sidelink resources are all periodic resources, the first information may further carry a periodicity indication applicable to the plurality of sidelink resources. The periodicity indication is used to determine that the plurality of sidelink resources are periodic resources. Alternatively, the first information may further carry a periodicity indication associated with each sidelink resource. This helps the second terminal determine, based on periodicity indication, that the plurality of sidelink resources are periodic resources. For example, the periodicity indication may be a first indicator. For example, the first indicator is " 1", and the first indicator is used to indicate that the plurality of sidelink resources are periodic resources. When each sidelink resource is associated with a periodicity indication, the periodicity indications associated with the sidelink resources have a same function, but may have different content.

In addition, when the first information does not carry the periodicity indication, if the first information carries a periodicity applicable to the plurality of sidelink resources or a periodicity associated with each sidelink resource, the second terminal may also determine that the plurality of sidelink resources are periodic resources.

In this embodiment of this application, each sidelink resource is associated with a periodicity and a validity period, so that a sidelink resource is selected more flexibly, and it is easier for the second terminal to match a transmission requirement moment when selecting the target sidelink resource based on the first information.

Example (2.5): In Case 1, when the first indication information indicates that each of the plurality of sidelink resources is a periodic resource, the first indication information further indicates a periodicity and/or a validity period of each of the plurality of sidelink resources.

In this case, in Example (2.5), step 504 may be implemented in the following manner: The second terminal determines, based on the first indication information, that the plurality of sidelink resources are all periodic resources, and determines periodicities and/or validity periods of the plurality of sidelink resources based on the first indication information.

For example, if the first indication information has only a function of indicating that each of the plurality of sidelink resources is a periodic resource, the first indication information, and a periodicity of the periodic resource and a validity period of the periodic resource may be carried in the first information. For example, the first indication information includes at least one bit, and a parameter on the at least one bit is used to indicate that each of the plurality of sidelink resources is a periodic resource.

For example, the first indication information includes one bit. In this case, if an indicator on the one bit is 1, it indicates that the plurality of sidelink resources are all periodic resources. Alternatively, each of the at least one bit is associated with one sidelink resource. If an indicator on a bit associated with the sidelink resource a is "1", the sidelink resource a is a periodic resource. If an indicator on a bit associated with the sidelink resource b is "0", the sidelink resource b is an aperiodic resource. For example, the plurality of sidelink resources include the sidelink resource 1 to the sidelink resource 3. If the sidelink resource 1 to the sidelink resource 3 are all periodic resources, the first indication information may be a bit sequence "111".

If the first information carries only the first indication information but does not carry a periodicity and a validity period, the first indication information not only indicates that each of the plurality of sidelink resources is a periodic resource, but also indicates a periodicity of each sidelink resource.

For example, the first indication information includes a plurality of bits. A first bit in the plurality of bits is used to indicate that each of the plurality of sidelink resources is a periodic resource, and a second bit in the plurality of bits is used to indicate periodicities of the plurality of sidelink resources.

For example, if there is one first bit and an indicator 1 on the first bit indicates that the plurality of sidelink resources are all periodic resources, and there are two second bits and an indicator on the second bits is 01, the second terminal may determine, based on the indicator "1" on the first bit, that the plurality of sidelink resources are all periodic resources. The second terminal may determine periodicities and/or validity periods of the plurality of sidelink resources based on the indicator "01" on the second bits.

For example, the second terminal has a preset Table 1, and the preset Table 1 has a periodicity and/or a validity period associated with the indicator "01". In this case, the second terminal may use the periodicity and/or the validity period associated with the indicator "01" as a common periodicity and/or a common validity period of the plurality of sidelink resources.

Certainly, in another embodiment of this application, the first indication information may further include a plurality of bits associated with each of the plurality of sidelink resources. An indicator on a third bit in a plurality of bits associated with one sidelink resource is used to indicate that the sidelink resource is a periodic resource, and an indicator on a fourth bit in the plurality of bits is used to indicate a periodicity and/or a validity period of the sidelink resource.

For example, the first indication information includes a plurality of bits of the sidelink resource 1. In this case, if an indicator on a third bit of the sidelink resource 1 is "1", the second terminal may determine that the sidelink resource 1 is a periodic resource. If an indicator on a fourth bit of the sidelink resource 1 is "11", the second terminal may determine, based on the indicator "11", a periodicity and/or a validity period of the sidelink resource 1 by querying a preset table 2. The preset table 2 has the periodicity and/or the validity period associated with the indicator "11".

The foregoing describes an example in which the first information not only carries the periodicity and the valid duration, but also carries the quantity of repetitions, or the first information carries only the valid duration and the periodicity. However, in an actual process, the first information may not carry the valid duration, but carries the periodicity and the quantity of repetitions. In this case, in a possible embodiment, when the validity period further includes the quantity of repetitions, the first information in this embodiment of this application may be shown in Table 1.13.

**Table 1.13**

| Identification information | Periodicity | Quantity of repetitions |
|---|---|---|
| Sidelink resource 1 | T1 | k1 |
| Sidelink resource 2 | | k2 |
| Sidelink resource 3 | T2 | k3 |
| Sidelink resource 4 | | |
| ... | ... | ... |
| Sidelink resource n | Tn | k4 |

The foregoing shows the content of the first information in a form of Table 1.13. For another example, the content of the first information in this embodiment of this application may alternatively be expressed as: {((sidelink resource 1, k1), (sidelink resource 2, k2), T1), ..., ((sidelink resource n, k4), Tn)}. Herein, T1 is applicable to the sidelink resource 1 and the sidelink resource 2. T2 is applicable to the sidelink resource 3 and the sidelink resource 4, and k3 is applicable to the sidelink resource 3 and the sidelink resource 4.

In Table 1.13, for example, some sidelink resources (for example, the sidelink resource 1 and the sidelink resource 2) in the sidelink resource 1 to the sidelink resource n share one periodicity. In an actual process, each sidelink resource may independently correspond to one periodicity. In this case, the first information in this embodiment of this application may be shown in Table 1.14.

**Table 1.14**

| Identification information | Periodicity | Quantity of repetitions |
|---|---|---|
| Sidelink resource 1 | T1 | k1 |
| Sidelink resource 2 | T2 | k2 |
| Sidelink resource 3 | T3 | k3 |
| Sidelink resource 4 | T4 | |
| ... | ... | ... |
| Sidelink resource n | Tn | kn |

The foregoing shows the content of the first information in a form of Table 1.14. For another example, the content of the first information in this embodiment of this application may alternatively be expressed as: {(sidelink resource 1, T1, k1), (sidelink resource 2, T2, k2), ((sidelink resource 3, T3), (sidelink resource 4, T4), k3), ..., (sidelink resource n, kn, Tn)}. Herein, k3 is applicable to the sidelink resource 3 and the sidelink resource 4.

It should be noted that, in Table 1.14, an example in which the sidelink resource 4 and the sidelink resource 3 share a quantity k3 of repetitions is used. Certainly, each of the sidelink resource 4 and the sidelink resource 3 may alternatively correspond to a quantity of repetitions. In this case, content of the first information may be shown in Table 1.15.

**Table 1.15**

| Identification information | Periodicity | Quantity of repetitions |
|---|---|---|
| Sidelink resource 1 | T1 | k1 |
| Sidelink resource 2 | T2 | k2 |
| Sidelink resource 3 | T3 | k3 |
| Sidelink resource 4 | T4 | k4 |
| ... | ... | ... |
| Sidelink resource n | Tn | kn |

The foregoing shows the content of the first information in a form of Table 1.15. For another example, the content of the first information in this embodiment of this application may alternatively be expressed as: {(sidelink resource 1, T1, k1), (sidelink resource 2, T2, k2), ..., (sidelink resource n, kn, Tn)}.

It may be understood that, when the validity period includes a quantity of repetitions, the second terminal may further determine valid duration of any sidelink resource based on a periodicity and a quantity of repetitions of the sidelink resource. With reference to Table 1.13, for example, the second terminal may determine, based on the periodicity T1 and the quantity k1 of repetitions of the sidelink resource 1, that the valid duration of the sidelink resource 1 is greater than or equal to T1×k1. For example, the second terminal may determine, based on the periodicity T1 and the quantity k2 of repetitions of the sidelink resource 2, that the valid duration of the sidelink resource 2 is greater than or equal to T1×k2.

Case (2): The plurality of sidelink resources are all aperiodic resources.

In Case (2), content of the first information may be shown in Example (2).

In a possible implementation, in Example (2), the first information may further include identification information of the plurality of sidelink resources.

Example (2): The first information includes first indication information, and the first indication information is a preset value. In this case, the first indication information indicates that the plurality of sidelink resources are all aperiodic resources.

For example, the preset value may be "0". Alternatively, the preset value may be a parameter whose quantity of repetitions is 1, and the preset value is applicable to the plurality of sidelink resources.

It may be understood that, when the first indication information is N bits, if the N bits are all 0, it indicates that the plurality of sidelink resources are aperiodic resources; or if the N bits are not all 0, it indicates a periodicity of a periodic resource in the plurality of sidelink resources.

As shown in Table 2.1, when the plurality of sidelink resources are all aperiodic resources, an example in which the preset value is "0" is used to describe the content of the first information.

**Table 2.1**

| Identification information | First indication information |
|---|---|
| Sidelink resource 1 | 0 |
| Sidelink resource 2 | |
| ... | |
| Sidelink resource n | |

The foregoing shows the content of the first information in a form of Table 2.1. For another example, the content of the first information in this embodiment of this application may alternatively be expressed as: {sidelink resource 1, sidelink resource 2, ..., sidelink resource n, 0}.

Correspondingly, in Example (2), step 503 in this embodiment of this application may be implemented in the following manner: The second terminal determines, based on the preset value, that the plurality of sidelink resources are all aperiodic resources.

Alternatively, the preset value includes a preset value of each sidelink resource.

Table 2.2 shows content of the first information when the plurality of sidelink resources are all aperiodic resources.

**Table 2.2**

| Identification information | First indication information |
|---|---|
| Sidelink resource 1 | Preset value 1 |
| Sidelink resource 2 | Preset value 2 |
| ... | ... |
| Sidelink resource n | Preset value n |

The foregoing shows the content of the first information in a form of Table 2.2. For another example, the content of the first information in this embodiment of this application may alternatively be expressed as: {(sidelink resource 1, preset value 1), (sidelink resource 2, preset value 2), ..., (sidelink resource n, preset value n)}.

Preset values associated with different sidelink resources may be the same or different. This is not limited in this embodiment of this application. For example, the preset value 1 is 1, and the preset value 2 is 0.

Correspondingly, step 503 in this embodiment of this application may be implemented in the following manner: The second terminal determines, based on a preset value of each of the plurality of sidelink resources, that each sidelink is an aperiodic resource. For example, the second terminal determines, based on the preset value 1, that the sidelink resource 1 is an aperiodic resource, and determines, based on the preset value 2, that the sidelink resource 2 is an aperiodic resource.

Case (3): The plurality of sidelink resources include a periodic resource and an aperiodic resource.

In a possible example, the first information includes second indication information, and the second indication information indicates the periodic resource in the plurality of sidelink resources. The first indication information indicates the aperiodic resource in the plurality of sidelink resources.

Optionally, the second indication information may further indicate a periodicity and a validity period of the periodic resource.

For example, the second indication information is associated with the periodic resource in the plurality of sidelink resources, the second indication information is a first indicator, and the first indicator is used to indicate that the sidelink resource is a periodic resource. In this case, the second terminal may determine that all sidelink resources associated with the second indication information are periodic resources. For example, if the second indication information is associated with the sidelink resource 1 and the sidelink resource 3, the second terminal may determine that both the sidelink resource 1 and the sidelink resource 3 are periodic resources.

For example, the second indication information is associated with the periodic resource in the plurality of sidelink resources, the second indication information is at least one bit, and the at least one bit is used to determine a periodicity and/or a validity period of the periodic resource. For example, if the at least one bit is "111", and the second terminal has the periodicity 1 and the validity period 1 that are associated with "111", the second terminal may determine that the periodicity of the periodic resource in the plurality of sidelink resources is the periodicity 1, and the validity period of the periodic resource in the plurality of sidelink resources is the validity period 1.

For example, the first indication information is associated with the aperiodic resource in the plurality of sidelink resources, the first indication information is a second indicator, and the second indicator is used to indicate that the sidelink resource is an aperiodic resource. In this case, the second terminal may determine that a sidelink resource associated with the first indication information is an aperiodic resource. For example, if the first indication information is associated with the sidelink resource 2, the second terminal may determine that the sidelink resource 2 is an aperiodic resource.

Correspondingly, the method provided in this embodiment of this application may further include: The second terminal determines the aperiodic resource in the plurality of sidelink resources based on the first indication information, and determines the periodic resource in the plurality of sidelink resources based on the second indication information.

Example (3.1): The first information includes first indication information applicable to each of the plurality of sidelink resources, and a periodicity and a validity period applicable to each periodic resource.

It may be understood that, in this embodiment, if the periodic resources are associated with different periodicities and different validity periods, the second terminal and the first terminal may negotiate with each other, to determine sidelink resources associated with a same indicator as aperiodic resources.

It should be noted that the first indication information applicable to the aperiodic resource may mean that each aperiodic resource in the plurality of sidelink resources is associated with the first indication information.

Example (3.1) is described in detail below with reference to Table 3.1 by using an example in which the validity period includes the quantity of repetitions and the valid duration.

**Table 3.1**

| Identification information | Periodicity | First indication information | Second indication information | Quantity of repetitions | Valid duration |
|---|---|---|---|---|---|
| Sidelink resource 1 | - | Second indicator (0) | | - | |
| Sidelink resource 2 | | | | | |
| Sidelink | | | | | |

| resource 3 | | | | | |
|---|---|---|---|---|---|
| Sidelink resource 4 | T1 | - | First indicator (1) | k1 | L1 |
| Sidelink resource 5 | T2 | | | k2 | L2 |

The foregoing shows the content of the first information in a form of Table 3.1. For another example, the first information in this embodiment of this application may alternatively be implemented in the following manner: {(sidelink resource 1 to sidelink resource 3, second indicator), ((sidelink resource 4, T1, k1, L1), (sidelink resource 5, T2, k2, L2), first indicator)}.

With reference to Table 3.1, the second terminal may determine that the sidelink resource 1 to the sidelink resource 3 are aperiodic resources; the sidelink resource 4 and the sidelink resource 5 are periodic resources; the periodicity of the sidelink resource 4 is T1, the quantity of repetitions of the sidelink resource 4 is k1, and the valid duration of the sidelink resource 4 is L1; and the periodicity of the sidelink resource 5 is T2, the quantity of repetitions of the sidelink resource 5 is k2, and the valid duration of the sidelink resource 5 is L2.

Correspondingly, in Example (3.1), the content of the first information may alternatively be: {(identification information of the sidelink resource 1, identification information of the sidelink resource 2, identification information of the sidelink resource 3, first indication information), (identification information of the sidelink resource 4, T1, k1, L1), (identification information of the sidelink resource 5, T2, k2, L2)}.

It should be noted that, in Example (3.1), if the validity period does not include the quantity of repetitions, the content related to the quantity of repetitions in Table 3.1 may be omitted, and the second terminal may further determine the quantity of repetitions based on the periodicity and the valid duration of each periodic resource.

Correspondingly, in Example (3.1), step 503 in this embodiment of this application may be implemented in the following manner: The second terminal determines the aperiodic resource in the plurality of sidelink resources based on the first indication information. Step 504 may be implemented in the following manner: The second terminal uses a periodicity and a validity period associated with any sidelink resource as the periodicity and the validity period of the sidelink resource.

Example (3.2): The first information includes first indication information applicable to all aperiodic resources in the plurality of sidelink resources, and a validity period and a periodicity applicable to all periodic resources in the plurality of sidelink resources.

Correspondingly, in Example (3.2), step 503 in this embodiment of this application may be implemented in the following manner: The second terminal determines the aperiodic resource in the plurality of sidelink resources based on the first indication information. Step 504 may be implemented in the following manner: The second terminal uses the validity period and the periodicity as the validity period and the periodicity of each periodic resource.

Example (3.2) is described in detail below with reference to Table 3.2 by using an example in which the validity period includes the quantity of repetitions and the valid duration, and the second indicator is "0".

**Table 3.2**

| Identification information | Periodicity | First indication information | Quantity of repetitions | Valid duration |
|---|---|---|---|---|
| Sidelink resource 1 | - | 0 | - | |
| Sidelink resource 2 | | | | |
| Sidelink resource 3 | | | | |
| Sidelink resource 4 | T1 | - | k1 | L1 |
| Sidelink resource 5 | | | | |

The foregoing shows the content of the first information in a form of Table 3.2. For another example, the first information in this embodiment of this application may alternatively be implemented in the following manner: {(sidelink resource 1 to sidelink resource 3, second indicator), (sidelink resource 4 and sidelink resource 5, T1, k1, L1)}.

With reference to Table 3.2, it can be learned that the sidelink resource 1 to the sidelink resource 3 are all associated with the second indicator "0", that is, the second indicator "0" is applicable to the sidelink resource 1 to the sidelink resource 3. In this case, the sidelink resource 1 to the sidelink resource 3 are aperiodic resources. Both the sidelink resource 4 and the sidelink resource 5 are associated with the periodicity T1. In this case, both the sidelink resource 4 and the sidelink resource 5 are periodic resources. In addition, the periodicities of the sidelink resource 4 and the sidelink resource 5 are T1, the quantities of repetitions of the sidelink resource 4 and the sidelink resource 5 are k1, and the valid duration of the sidelink resource 4 and that of the sidelink resource 5 are L1.

Correspondingly, in Example (3.2), the content of the first information may alternatively be: {(identification information of the sidelink resource 1, identification information of the sidelink resource 2, identification information of the sidelink resource 3, first indication information), ((identification information of the sidelink resource 4, identification information of the sidelink resource 5, T1, k1, L1), second indication information)}. It should be noted that, when the first information carries the periodicity, indication information (for example, the second indication information) used to indicate the periodic resource may be omitted.

Example (3.3): The first information includes first indication information associated with each aperiodic resource in the plurality of sidelink resources, a periodicity of each periodic resource, and a validity period of each periodic resource.

For example, as shown in FIG. 7, the periodicity of the sidelink resource 1 is the periodicity 1, the periodicity of the sidelink resource 2 is the periodicity 2, and the first indication information indicates that the sidelink resource 3 is an aperiodic resource.

Correspondingly, in Example (3.3), step 503 in this embodiment of this application may be implemented in the following manner: If a first sidelink resource in the plurality of sidelink resources is associated with the first indication information, the second terminal determines that the first sidelink resource is an aperiodic resource. The second terminal determines a validity period associated with a second sidelink resource in the plurality of sidelink resources as a validity period of the second sidelink resource. The second terminal determines a periodicity associated with the second sidelink resource as a periodicity of the second sidelink resource. The first sidelink resource is any one of all aperiodic resources in the plurality of sidelink resources, and the second sidelink resource is any one of all periodic resources in the plurality of sidelink resources.

Example (3.3) is described in detail below with reference to Table 3.3 by using an example in which the validity period includes the quantity of repetitions and the valid duration, and second indicators associated with different sidelink resources are the same.

**Table 3.3**

| Identification information | Periodicity | Second indicator | Quantity of repetitions | Valid duration |
|---|---|---|---|---|
| Sidelink resource 1 | - | 0 | - | |
| Sidelink resource 2 | | 0 | | |
| Sidelink resource 3 | | 0 | | |
| Sidelink resource 4 | T1 | - | k1 | L1 |
| Sidelink resource 5 | T2 | | k2 | L2 |

With reference to Table 3.3, it can be learned that the sidelink resource 1 is associated with the second indicator "0", the sidelink resource 2 is associated with the second indicator "0", and the sidelink resource 3 is associated with the second indicator "0". In this case, the sidelink resource 1 to the sidelink resource 3 are all aperiodic resources. The sidelink resource 4 is associated with T1. In this case, the sidelink resource 4 is a periodic resource. In addition, the periodicity of the sidelink resource 4 is T1, the quantity of repetitions of the sidelink resource 4 is k1, and the valid duration of the sidelink resource 4 is L1. The sidelink resource 5 is associated with T2. In this case, the sidelink resource 5 is a periodic resource. In addition, the periodicity of the sidelink resource 5 is T2, the quantity of repetitions of the sidelink resource 5 is k2, and the valid duration of the sidelink resource 5 is L2.

Correspondingly, in Example (3.3), the content of the first information may alternatively be: {(sidelink resource 1, "0"), (sidelink resource 2, "0"), (identification information of the sidelink resource 3, "0"), (sidelink resource 4, T1, k1, L1), (sidelink resource 5, T2, k2, L2)}.

Example (3.4): The first information includes a second indicator associated with each aperiodic resource in the plurality of sidelink resources, and a periodicity and a validity period applicable to all periodic resources in the plurality of sidelink resources.

Correspondingly, in Example (3.4), step 503 in this embodiment of this application may be implemented in the following manner: The second terminal determines a sidelink resource associated with the second indicator in the plurality of sidelink resources as an aperiodic resource. The second terminal determines the periodicity and the validity period as periodicities and validity periods of all the periodic resources in the plurality of sidelink resources.

Example (3.4) is described in detail below with reference to Table 3.4 by using an example in which the validity period includes the quantity of repetitions and the valid duration, and second indicators associated with different sidelink resources are the same.

**Table 3.4**

| Identification information | Periodicity | Second indicator | Quantity of repetitions | Valid duration |
|---|---|---|---|---|
| Sidelink resource 1 | - | 0 | - | |
| Sidelink resource 2 | | 0 | | |
| Sidelink resource 3 | | 0 | | |
| Sidelink resource 4 | T1 | - | k1 | L1 |
| Sidelink resource 5 | | | | |

With reference to Table 3.4, it can be learned that the sidelink resource 1 is associated with "0", the sidelink resource 2 is associated with "0", and the sidelink resource 3 is associated with "0". In this case, the sidelink resource 1 to the sidelink resource 3 are all aperiodic resources. The sidelink resource 4 and the sidelink resource 5 are associated with T1. In this case, both the sidelink resource 4 and the sidelink resource 5 are periodic resources. In addition, the quantities of repetitions of the sidelink resource 4 and the sidelink resource 5 are k1, and the valid duration of the sidelink resource 4 and that of the sidelink resource 5 are L1.

Correspondingly, in Example (3.4), the content of the first information may alternatively be expressed as: {(sidelink resource 1, "0"), (sidelink resource 2, "0"), (sidelink resource 3, "0"), (sidelink resource 4, sidelink resource 5, k1, L1)}.

Certainly, in Example (3.4), each periodic resource may alternatively be independently associated with a validity period. In this case, Table 3.4 may be replaced with Table 3.5.

**Table 3.5**

| Identification information | Periodicity | Second indicator | Quantity of repetitions | Valid duration |
|---|---|---|---|---|
| Sidelink resource 1 | - | 0 | - | |
| Sidelink resource 2 | | 0 | | |
| Sidelink resource 3 | | 0 | | |
| Sidelink resource 4 | T1 | - | k1 | L1 |
| Sidelink resource 5 | | | k2 | L2 |

With reference to Table 3.5, it can be learned that the sidelink resource 1 is associated with "0", the sidelink resource 2 is associated with "0", and the sidelink resource 3 is associated with "0". In this case, the sidelink resource 1 to the sidelink resource 3 are all aperiodic resources. The sidelink resource 4 and the sidelink resource 5 are associated with T1. In this case, both the sidelink resource 4 and the sidelink resource 5 are periodic resources. In addition, the quantity of repetitions of the sidelink resource 4 is k1, and the valid duration of the sidelink resource 4 is L1. The quantity of repetitions of the sidelink resource 5 is k2, and the valid duration of the sidelink resource 5 is L2.

Correspondingly, with reference to Table 3.5, in Example (3.4), the content of the first information may alternatively be expressed as: {(sidelink resource 1, "0"), (sidelink resource 2, "0"), (sidelink resource 3, "0"), ((sidelink resource 4, k1, L1), (sidelink resource 5, k2, L2), T1)}.

In a possible implementation, in case (3), periodic resources in the plurality of sidelink resources have different periodicities, but the periodic resources in the plurality of sidelink resources have same valid duration, a same quantity of repetitions, or a same upper valid duration limit.

For example, the plurality of sidelink resources include the sidelink resource 1, the sidelink resource 2, the sidelink resource 3, the sidelink resource 4, and the sidelink resource 5. The sidelink resource 1 to the sidelink resource 3 are periodic resources. Periodicities of the sidelink resource 1, the sidelink resource 2, and the sidelink resource 3 are different, but the sidelink resource 1 to the sidelink resource 3 have same valid duration and a same quantity of repetitions. The sidelink resource 4 and the sidelink resource 5 are aperiodic resources.

It should be noted that the valid duration in the example in which the first information carries the periodicity and the valid duration in the foregoing embodiment of this application may be replaced with the quantity of repetitions. In this way, after receiving the first information, the second terminal may further calculate the valid duration based on the periodicity and the quantity of repetitions. The valid duration in the example in which the first information carries the periodicity, the quantity of repetitions, and the valid duration in the foregoing embodiment may be replaced with the upper valid duration limit. In this way, after receiving the first information, the second terminal may determine the upper valid duration limit of each sidelink resource.

The foregoing mainly describes the solutions provided in embodiments of this application from a perspective of interaction between network elements. It may be understood that, to implement the foregoing functions, the network elements such as the first terminal and the second terminal include a corresponding structure and/or software module for implementing each of the functions. A person skilled in the art should be easily aware that, in combination with units and algorithm steps of the examples described in embodiments disclosed in this specification, this application may be implemented by hardware or a combination of hardware and computer software. Whether a function is implemented by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, the first terminal and the second terminal each may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely logical function division. During actual implementation, there may be other division manners.

The foregoing describes the method in embodiments of this application with reference to FIG. 5 to FIG. 11. The following describes a communications apparatus that is provided in embodiments of this application and that performs the foregoing method. A person skilled in the art may understand that the method and the apparatus may be mutually combined and referenced. The communications apparatus provided in embodiments of this application may perform the steps performed by the first terminal and the second terminal in the foregoing analysis method.

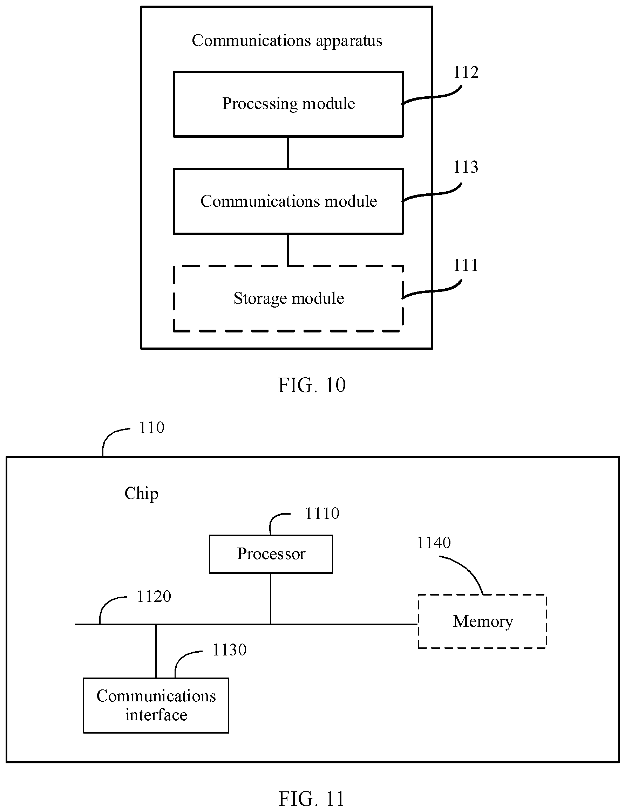

When an integrated unit is used, FIG. 10 shows a communications apparatus in the foregoing embodiment. The communications apparatus may include a communications module 113 and a processing module 112.

In an optional implementation, the communications apparatus may further include a storage module 111, configured to store program code and data of the communications apparatus.

For example, the communications apparatus is a first terminal, or a chip applied to the first terminal. In this case, the communications module 113 is configured to support the communications apparatus in communicating with an external network element (for example, the second terminal). For example, the communications module 113 is configured to perform a signal receiving and sending operation performed by the first terminal in the foregoing method embodiment. The processing module 112 is configured to perform a signal processing operation performed by the first terminal in the foregoing method embodiment.

For example, the communications module 113 is configured to perform a sending action performed by the first terminal in step 502 in FIG. 5 in the foregoing embodiment. The processing module 112 is configured to support the communications apparatus in performing an action performed by the first terminal in step 502 in FIG. 5.

For another example, the communications apparatus is a second terminal, or a chip applied to the second terminal. In this case, the communications module 113 is configured to support the communications apparatus in communicating with an external network element (for example, the first terminal). For example, the communications module 113 is configured to perform a signal receiving and sending operation performed by the second terminal in the foregoing method embodiment. The processing module 112 is configured to perform a signal processing operation performed by the second terminal in the foregoing method embodiment.

For example, the communications module 113 is configured to perform a receiving action performed by the second terminal in step 502 in FIG. 5 in the foregoing embodiment. The processing module 112 is configured to perform actions performed by the second terminal in step 503 and step 504 in FIG. 5 in the foregoing embodiment.

It should be noted that, in FIG. 10, the communications module 113 may alternatively be replaced with a communications unit, the processing module 112 may alternatively be replaced with a processing unit, and the storage module 111 may alternatively be replaced with a storage unit. The processing unit is configured to control and manage actions of the communications apparatus. For example, the processing unit is configured to perform an information/data processing step performed by the communications apparatus. The communications unit is configured to support the communications apparatus in performing an information/data sending or receiving step.

In a possible implementation, the communications unit may include a receiving unit and a sending unit. The receiving unit is configured to receive a signal, and the sending unit is configured to send a signal.

The processing module 112 may be a processor or a controller, for example, may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logic blocks, modules, and circuits described with reference to content disclosed in this application. Alternatively, the processor may be a combination of processors implementing a computing function, for example, a combination of one or more microprocessors, or a combination of a digital signal processor and a microprocessor. The communications module may be a transceiver, a transceiver circuit, a communications interface, or the like. The storage module may be a memory.

When the processing module 112 is the processor 31 or the processor 35, the communications module 113 is the transceiver 33, and the storage module 111 is the memory 32, the communications apparatus in this application may be the communications device shown in FIG. 3.

For example, the communications device is a first terminal, or a chip applied to the first terminal. In this case, the transceiver 33 is configured to support the communications device in communicating with an external network element (for example, an access management network element). For example, the transceiver 33 is configured to perform a signal receiving and sending operation performed by the first terminal in the foregoing method embodiment. The processor 31 or the processor 35 is configured to perform a signal processing operation performed by the first terminal in the foregoing method embodiment.

For example, the transceiver 33 is configured to perform a sending action performed by the first terminal in step 502 in FIG. 5 in the foregoing embodiment. The processor 31 or the processor 35 is configured to support the communications device in performing an action performed by the first terminal in step 502 in FIG. 5.

For another example, the communications device is a second terminal, or a chip applied to the second terminal. In this case, the transceiver 33 is configured to support the communications device in communicating with an external network element (for example, the first terminal). For example, the transceiver 33 is configured to perform a signal receiving and sending operation performed by the second terminal in the foregoing method embodiment. The processor 31 or the processor 35 is configured to perform a signal processing operation performed by the second terminal in the foregoing method embodiment.

For example, the transceiver 33 is configured to perform a receiving action performed by the second terminal in step 502 in FIG. 5 in the foregoing embodiment. The processor 31 or the processor 35 is configured to perform actions performed by the second terminal in step 503 and step 504 in FIG. 5 in the foregoing embodiment.

FIG. 11 is a schematic diagram of a structure of a chip 110 according to an embodiment of this application. The chip 110 includes one or more (including two) processors 1110 and a communications interface 1130.

Optionally, the chip 110 further includes a memory 1140. The memory 1140 may include a read-only memory and a random access memory, and provide operation instructions and data for the processor 1110. A part of the memory 1140 may further include a non-volatile random access memory (non-volatile random access memory, NVRAM).

In some implementations, the memory 1140 stores the following elements: an executable module or a data structure, a subset thereof, or an extended set thereof.

In this embodiment of this application, the operation instructions stored in the memory 1140 (where the operation instructions may be stored in an operating system) are invoked to perform a corresponding operation.

In a possible implementation, a first terminal and a second terminal use a similar chip structure, and different apparatuses may use different chips to implement respective functions.

The processor 1110 controls a processing operation of any one of the first terminal and the second terminal, and the processor 1110 may also be referred to as a central processing unit (central processing unit, CPU).

The memory 1140 may include a read-only memory and a random access memory, and provide instructions and data for the processor 1110. A part of the memory 1140 may further include an NVRAM. For example, in an application, the memory 1140, the communications interface 1130, and the memory 1140 are coupled together by using a bus system 1120. The bus system 1120 may further include a power bus, a control bus, a status signal bus, and the like in addition to a data bus. However, for clarity of description, various types of buses in FIG. 11 are marked as the bus system 1120.

The method disclosed in the foregoing embodiment of this application may be applied to the processor 1110, or may be implemented by the processor 1110. The processor 1110 may be an integrated circuit chip and has a signal processing capability. In an implementation process, the steps in the foregoing method may be implemented by using a hardware integrated logic circuit in the processor 1110, or by using instructions in a form of software. The processor 1110 may be a general-purpose processor, a digital signal processor (digital signal processing, DSP), an ASIC, a field-programmable gate array (field-programmable gate array, FPGA) or another programmable logic device, a discrete gate or a transistor logic device, or a discrete hardware component. The processor 1110 may implement or perform the methods, steps, and logical block diagrams that are disclosed in embodiments of this application. The general-purpose processor may be a microprocessor, may be any conventional processor, or the like. The steps of the method disclosed with reference to embodiments of this application may be directly performed by a hardware decoding processor, or may be performed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1140, and the processor 1110 reads information in the memory 1140 and completes the steps of the foregoing method in combination with hardware of the processor 1110.

In a possible implementation, the communications interface 1130 is configured to perform receiving and sending steps performed by the first terminal in the embodiment shown in FIG. 5. The processor 1110 is configured to perform a processing step performed by the first terminal in the embodiment shown in FIG. 5.

In another possible implementation, the communications interface 1130 is configured to perform receiving and sending steps performed by the second terminal in the embodiment shown in FIG. 5. The processor 1110 is configured to perform a processing step performed by the second terminal in the embodiment shown in FIG. 5.

The communications module may be a communications interface of the apparatus, and is configured to receive a signal from another apparatus. For example, when the apparatus is implemented as a chip, the communications module is a communications interface used by the chip to receive a signal or send a signal from or to another chip or apparatus.

According to an aspect, a computer-readable storage medium is provided. The computer-readable storage medium stores instructions, and when the instructions are run, functions of the first terminal in FIG. 5 are implemented.

According to an aspect, a computer-readable storage medium is provided. The computer-readable storage medium stores instructions, and when the instructions are run, functions of the second terminal in FIG. 5 are implemented.

According to an aspect, a computer program product including instructions is provided. The computer program product includes the instructions, and when the instructions are run, functions of the first terminal in FIG. 5 are implemented.

According to another aspect, a computer program product including instructions is provided. The computer program product includes the instructions, and when the instructions are run, functions of the second terminal in FIG. 5 are implemented.

According to an aspect, a chip is provided. The chip is applied to a first terminal, and the chip includes at least one processor and a communications interface. The communications interface is coupled to the at least one processor, and the processor is configured to run instructions, to implement functions of the first terminal in FIG. 5.

According to another aspect, an embodiment of this application provides a chip. The chip is applied to an access management network element, and the chip includes at least one processor and a communications interface. The communications interface is coupled to the at least one processor, and the processor is configured to run instructions, to implement functions of the second terminal in FIG. 5.

An embodiment of this application provides a communications system. The communications system includes a first terminal and a second terminal. The first terminal is configured to perform a function performed by the first terminal in FIG. 5, and the second terminal is configured to perform a function performed by the second terminal in FIG. 5.

With reference to the foregoing descriptions, this application further provides the following embodiments.

Embodiment 1: A method for indicating a sidelink resource is provided. The method includes:
A first terminal determines a plurality of sidelink resources, where the plurality of sidelink resources can be used by a second terminal to send data to the first terminal, and the plurality of sidelink resources include an aperiodic resource and/or a periodic resource.

The first terminal sends first information to the second terminal, where the first information includes a periodicity of the periodic resource and a validity period of the periodic resource, and/or first indication information, and the first indication information indicates the periodic resource or the aperiodic resource in the plurality of sidelink resources.

Embodiment 2: According to the method for indicating a sidelink resource in Embodiment 1, each of the plurality of sidelink resources is a periodic resource. The periodicity and the validity period are applicable to each sidelink resource.

Embodiment 3: According to the method for indicating a sidelink resource in Embodiment 1, each of the plurality of sidelink resources is a periodic resource, the periodicity includes a periodicity of each sidelink resource, and the validity period includes a validity period of each sidelink resource.

Embodiment 4: According to the method for indicating a sidelink resource in Embodiment 1, when the first indication information indicates that each of the plurality of sidelink resources is a periodic resource, the first indication information further indicates a periodicity and/or a validity period of each of the plurality of sidelink resources.

Embodiment 5: According to the method for indicating a sidelink resource in Embodiment 1, the first indication information is a preset value, and the first indication information indicates that the plurality of sidelink resources are all aperiodic resources.

Embodiment 6: According to the method for indicating a sidelink resource in Embodiment 1, the plurality of sidelink resources include a periodic resource and an aperiodic resource, the first information further includes second indication information, the second indication information indicates the periodic resource in the plurality of sidelink resources, and the first indication information indicates the aperiodic resource in the plurality of sidelink resources.

Embodiment 7: According to the method for indicating a sidelink resource in Embodiment 6, the periodicity and the validity period are applicable to each periodic resource in the plurality of sidelink resources.

Embodiment 8: According to the method for indicating a sidelink resource in Embodiment 6, the periodicity includes a periodicity of each periodic resource in the plurality of sidelink resources, and the validity period includes a validity period of each periodic resource.

Embodiment 9: According to the method for indicating a sidelink resource in Embodiment 3 or Embodiment 8, different periodic resources in the plurality of sidelink resources have different periodicities, and the different periodic resources have a same validity period.

Embodiment 10: According to the method for indicating a sidelink resource in any one of Embodiment 1 to Embodiment 9, the validity period includes a quantity of repetitions or valid duration.

Embodiment 11: According to the method for indicating a sidelink resource in any one of Embodiment 1 to Embodiment 10, a start moment of the valid duration is a moment at which the second terminal sends a trigger message, and the trigger message is used to trigger the first terminal to send the first information to the second terminal; or
a start moment of the valid duration is a moment at which the first terminal sends the first information; or
a start moment of the valid duration is a start moment of the earliest sidelink resource in the plurality of sidelink resources; or
a start moment of the valid duration is a start moment of a sidelink resource.

Embodiment 12: According to the method for indicating a sidelink resource in Embodiment 10 or Embodiment 11, valid duration of a first periodic resource in the plurality of sidelink resources is determined based on an end moment of the first periodic resource and a start moment of the first periodic resource.

Embodiment 13: According to the method for indicating a sidelink resource in any one of Embodiment 9 to Embodiment 12, a quantity of repetitions of the first periodic resource in the plurality of sidelink resources is determined based on the valid duration of the first periodic resource and a periodicity of the first periodic resource.

Embodiment 14: According to the method for indicating a sidelink resource in Embodiment 13, the quantity of repetitions of the first periodic resource is obtained by dividing the valid duration of the first periodic resource by the periodicity of the first periodic resource and performing rounding.

Embodiment 15: According to the method for indicating a sidelink resource in any one of Embodiment 1 to Embodiment 14, the method provided in this embodiment of this application further includes: The first terminal receives the data from the second terminal on a target sidelink resource in the plurality of sidelink resources.

Embodiment 16: A method for determining a sidelink resource is provided, including: A second terminal receives first information from a first terminal, where the first information includes a periodicity and a validity period of a periodic resource in a plurality of sidelink resources, and/or first indication information, the first indication information indicates the periodic resource or an aperiodic resource in the plurality of sidelink resources, and the plurality of sidelink resources can be used by the second terminal to send data to the first terminal. The second terminal determines the aperiodic resource in the plurality of sidelink resources based on the first information; and/or the second terminal determines a periodicity of each periodic resource in the plurality of sidelink resources and a validity period of each periodic resource based on the first information.

Embodiment 17: According to the method for determining a sidelink resource in Embodiment 16, the periodicity and the validity period are applicable to each of the plurality of sidelink resources.

That the second terminal determines a periodicity of each periodic resource in the plurality of sidelink resources and a validity period of each periodic resource based on the first information includes:

The second terminal determines the periodicity as the periodicity of each periodic resource, and determines the validity period as the validity period of each periodic resource.

Embodiment 18: According to the method for determining a sidelink resource in Embodiment 16, the periodicity includes a periodicity of each sidelink resource, and the validity period includes a validity period of each sidelink resource.

Embodiment 19: According to the method for determining a sidelink resource in Embodiment 16, the first indication information indicates that the plurality of sidelink resources are all periodic resources, and indicates a periodicity and/or a validity period of each of the plurality of sidelink resources. That the second terminal determines a periodicity of each periodic resource in the plurality of sidelink resources and a validity period of each periodic resource based on the first information includes: The second terminal determines, based on the first indication information, that the plurality of sidelink resources are all periodic resources, and determines the periodicity of each periodic resource and/or the validity period of each periodic resource based on the first indication information.

Embodiment 20: According to the method for determining a sidelink resource in Embodiment 16, that the second terminal determines the aperiodic resource in the plurality of sidelink resources based on the first information includes:

The first indication information is a preset value, and the second terminal determines that the plurality of sidelink resources are all aperiodic resources.

Embodiment 21: According to the method for determining a sidelink resource in Embodiment 16, the first information further includes second indication information, the second indication information indicates the periodic resource in the plurality of sidelink resources, and the first indication information indicates the aperiodic resource in the plurality of sidelink resources. That the second terminal determines the aperiodic resource in the plurality of sidelink resources based on the first information includes:

The second terminal determines the aperiodic resource in the plurality of sidelink resources based on the first indication information; and/or that the second terminal determines the aperiodic resource in the plurality of sidelink resources based on the first information includes: The second terminal determines the periodic resource in the plurality of sidelink resources based on the second indication information.

Embodiment 22: According to the method for determining a sidelink resource in Embodiment 21, the periodicity and the validity period are applicable to each periodic resource in the plurality of sidelink resources.

Embodiment 23: According to the method for determining a sidelink resource in Embodiment 21, the periodicity includes the periodicity of each periodic resource in the plurality of sidelink resources, and the validity period includes the validity period of each periodic resource.

Embodiment 24: According to the method for determining a sidelink resource in Embodiment 18 or Embodiment 23, different periodic resources in the plurality of sidelink resources have different periodicities, and the different periodic resources have a same validity period.

Embodiment 25: According to the method for determining a sidelink resource in any one of Embodiment 16 to Embodiment 24, the validity period includes a quantity of repetitions or valid duration.

Embodiment 26: According to the method for determining a sidelink resource in any one of Embodiment 16 to Embodiment 25, a start moment of the valid duration is a moment at which the second terminal sends a trigger message, and the trigger message is used to trigger the first terminal to send the first information to the second terminal; or a start moment of the valid duration is a moment at which the first terminal sends the first information; or a start moment of the valid duration is a start moment of the earliest sidelink resource in the plurality of sidelink resources; or a start moment of the valid duration is a start moment of a sidelink resource.

Embodiment 27: According to the method for determining a sidelink resource in Embodiment 25 or Embodiment 26, valid duration of a first periodic resource in the plurality of sidelink resources is determined based on an end moment of the first periodic resource and a start moment of the first periodic resource.

Embodiment 28: According to the method for determining a sidelink resource in any one of Embodiment 24 to Embodiment 27, a quantity of repetitions of the first periodic resource in the plurality of sidelink resources is determined based on the valid duration of the first periodic resource and a periodicity of the first periodic resource.

Embodiment 29: According to the method for determining a sidelink resource in Embodiment 28, the quantity of repetitions of the first periodic resource is obtained by dividing the valid duration of the first periodic resource by the periodicity of the first periodic resource and performing rounding.

Embodiment 30: According to the method for determining a sidelink resource in any one of Embodiment 19 to Embodiment 29, the second terminal sends the data to the first terminal on a target sidelink resource in the plurality of sidelink resources.

Embodiment 31: A computer program product is provided. When the computer program product is run on a computer, the computer is enabled to perform the method in any one of Embodiment 1 to Embodiment 15.

Embodiment 32: A computer program product is provided. When the computer program product is run on a computer, the computer is enabled to perform the method in any one of Embodiment 16 to Embodiment 30.

Embodiment 33: A computer-readable storage medium is provided. The computer-readable storage medium stores instructions, and when the instructions are run on a computer, the computer is enabled to perform the method in any one of Embodiment 1 to Embodiment 15.

Embodiment 34: A computer-readable storage medium is provided. The computer-readable storage medium stores instructions, and when the instructions are run on a computer, the computer is enabled to perform the method in any one of Embodiment 16 to Embodiment 30.

Embodiment 35: A chip is provided. The chip includes a processor, and when the processor executes instructions, the processor is configured to perform the method in any one of Embodiment 1 to Embodiment 15. The instructions may be from a memory inside the chip, or may be from a memory outside the chip. Optionally, the chip further includes an input/output circuit.

Embodiment 36: A chip is provided. The chip includes a processor, and when the processor executes instructions, the processor is configured to perform the method in any one of Embodiment 16 to Embodiment 30. The instructions may be from a memory inside the chip, or may be from a memory outside the chip. Optionally, the chip further includes an input/output circuit.

Embodiment 37: A communications apparatus is provided. The communications apparatus is a first terminal or a chip or a chip system applied to the first terminal, and the apparatus includes a processor and a transceiver. The processor is configured to determine a plurality of sidelink resources, where the plurality of sidelink resources can be used by a second terminal to send data to the first terminal, and the plurality of sidelink resources include an aperiodic resource and/or a periodic resource. The transceiver is configured to send first information to the second terminal, where the first information includes a periodicity of the periodic resource and a validity period of the periodic resource, and/or first indication information, and the first indication information indicates the periodic resource or the aperiodic resource in the plurality of sidelink resources.

Embodiment 38: According to the communications apparatus in Embodiment 37, each of the plurality of sidelink resources is a periodic resource. The periodicity and the validity period are applicable to each sidelink resource.

Embodiment 39: According to the communications apparatus in Embodiment 37, each of the plurality of sidelink resources is a periodic resource, the periodicity includes a periodicity of each sidelink resource, and the validity period includes a validity period of each sidelink resource.

Embodiment 40: According to the communications apparatus in Embodiment 37, when the first indication information indicates that each of the plurality of sidelink resources is a periodic resource, the first indication information further indicates a periodicity and/or a validity period of each of the plurality of sidelink resources.

Embodiment 41: According to the communications apparatus in Embodiment 37, the first indication information is a preset value, and the first indication information indicates that the plurality of sidelink resources are all aperiodic resources.

Embodiment 42: According to the communications apparatus in Embodiment 37, the plurality of sidelink resources include a periodic resource and an aperiodic resource, the first information further includes second indication information, the second indication information indicates the periodic resource in the plurality of sidelink resources, and the first indication information indicates the aperiodic resource in the plurality of sidelink resources.

Embodiment 43: According to the communications apparatus in Embodiment 42, the periodicity and the validity period are applicable to each periodic resource in the plurality of sidelink resources.

Embodiment 44: According to the communications apparatus in Embodiment 42, the periodicity includes a periodicity of each periodic resource in the plurality of sidelink resources, and the validity period includes a validity period of each periodic resource.

Embodiment 45: According to the communications apparatus in Embodiment 39 or Embodiment 44, different periodic resources in the plurality of sidelink resources have different periodicities, and the different periodic resources have a same validity period.

Embodiment 46: According to the communications apparatus in any one of Embodiment 37 to Embodiment 45, the validity period includes a quantity of repetitions or valid duration.

Embodiment 47: According to the communications apparatus in any one of Embodiment 37 to Embodiment 46, a start moment of the valid duration is a moment at which the second terminal sends a trigger message, and the trigger message is used to trigger the first terminal to send the first information to the second terminal; or a start moment of the valid duration is a moment at which the first terminal sends the first information; or
a start moment of the valid duration is a start moment of the earliest sidelink resource in the plurality of sidelink resources; or a start moment of the valid duration is a start moment of a sidelink resource.

Embodiment 48: According to the communications apparatus in Embodiment 46 or Embodiment 47, valid duration of a first periodic resource in the plurality of sidelink resources is determined based on an end moment of the first periodic resource and a start moment of the first periodic resource.

Embodiment 49: According to the communications apparatus in any one of Embodiment 45 to Embodiment 48, a quantity of repetitions of the first periodic resource in the plurality of sidelink resources is determined based on the valid duration of the first periodic resource and a periodicity of the first periodic resource.

Embodiment 50: According to the communications apparatus in Embodiment 49, the quantity of repetitions of the first periodic resource is obtained by dividing the valid duration of the first periodic resource by the periodicity of the first periodic resource and performing rounding.

Embodiment 51: According to the communications apparatus in any one of Embodiment 37 to Embodiment 50, the transceiver is further configured to receive the data from the second terminal on a target sidelink resource in the plurality of sidelink resources.

Embodiment 52: A communications apparatus is provided. The communications apparatus is a second terminal or a chip or a chip system applied to the second terminal, and the communications apparatus includes a transceiver and a processor. The transceiver is configured to receive first information from a first terminal, where the first information includes a periodicity of a periodic resource and a validity period in a plurality of sidelink resources, and/or first indication information, the first indication information indicates the periodic resource or an aperiodic resource in the plurality of sidelink resources, and the plurality of sidelink resources can be used by the second terminal to send data to the first terminal. The processor is configured to determine the aperiodic resource in the plurality of sidelink resources based on the first information; and/or configured to determine a periodicity of each periodic resource in the plurality of sidelink resources and a validity period of each periodic resource based on the first information.

Embodiment 53: According to the communications apparatus in Embodiment 52, the periodicity and the validity period are applicable to each of the plurality of sidelink resources.

The processor is configured to: determine the periodicity as the periodicity of each periodic resource, and determine the validity period as the validity period of each periodic resource.

Embodiment 54: According to the communications apparatus in Embodiment 52, the periodicity includes a periodicity of each sidelink resource, and the validity period includes a validity period of each sidelink resource.

Embodiment 55: According to the communications apparatus in Embodiment 52, the first indication information indicates that the plurality of sidelink resources are all periodic resources, and indicates a periodicity and/or a validity period of each of the plurality of sidelink resources. The processor is configured to: determine, based on the first indication information, that the plurality of sidelink resources are all periodic resources, and determine the periodicity of each periodic resource and/or the validity period of each periodic resource based on the first indication information.

Embodiment 56: According to the communications apparatus in Embodiment 52, the first indication information is a preset value, and the processor is configured to determine that the plurality of sidelink resources are all aperiodic resources.

Embodiment 57: According to the communications apparatus in Embodiment 52, the first information further includes second indication information, the second indication information indicates the periodic resource in the plurality of sidelink resources, and the first indication information indicates the aperiodic resource in the plurality of sidelink resources. The processor is configured to determine the aperiodic resource in the plurality of sidelink resources based on the first information; and/or the processor is configured to determine the periodic resource in the plurality of sidelink resources based on the second indication information.

Embodiment 58: According to the communications apparatus in Embodiment 57, the periodicity and the validity period are applicable to each periodic resource in the plurality of sidelink resources.

Embodiment 59: According to the communications apparatus in Embodiment 57, the periodicity includes the periodicity of each periodic resource in the plurality of sidelink resources, and the validity period includes the validity period of each periodic resource.

Embodiment 60: According to the communications apparatus in Embodiment 54 or Embodiment 59, different periodic resources in the plurality of sidelink resources have different periodicities, and the different periodic resources have a same validity period.

Embodiment 61: According to the communications apparatus in any one of Embodiment 52 to Embodiment 60, the validity period includes a quantity of repetitions or valid duration.

Embodiment 62: According to the communications apparatus in any one of Embodiment 60 to Embodiment 61, a start moment of the valid duration is a moment at which the second terminal sends a trigger message, and the trigger message is used to trigger the first terminal to send the first information to the second terminal; or a start moment of the valid duration is a moment at which the first terminal sends the first information; or a start moment of the valid duration is a start moment of the earliest sidelink resource in the plurality of sidelink resources; or a start moment of the valid duration is a start moment of a sidelink resource.

Embodiment 63: According to the communications apparatus in Embodiment 61 or Embodiment 62, valid duration of a first periodic resource in the plurality of sidelink resources is determined based on an end moment of the first periodic resource and a start moment of the first periodic resource.

Embodiment 64: According to the communications apparatus in any one of Embodiment 60 to Embodiment 63, a quantity of repetitions of the first periodic resource in the plurality of sidelink resources is determined based on the valid duration of the first periodic resource and a periodicity of the first periodic resource.

Embodiment 65: According to the communications apparatus in Embodiment 64, the quantity of repetitions of the first periodic resource is obtained by dividing the valid duration of the first periodic resource by the periodicity of the first periodic resource and performing rounding.

Embodiment 66: According to the communications apparatus in any one of Embodiment 52 to Embodiment 65, the transceiver is further configured to send the data to the first terminal on a target sidelink resource in the plurality of sidelink resources.

Embodiment 67: A communications apparatus is provided. The communications apparatus is a first terminal or a chip or a chip system applied to the first terminal, and the apparatus includes a processing module and a communications module. The processing module is configured to determine a plurality of sidelink resources, where the plurality of sidelink resources can be used by a second terminal to send data to the first terminal, and the plurality of sidelink resources include an aperiodic resource and/or a periodic resource. The communications module is configured to send first information to the second terminal, where the first information includes a periodicity of the periodic resource and a validity period of the periodic resource, and/or first indication information, and the first indication information indicates the periodic resource or the aperiodic resource in the plurality of sidelink resources.

Embodiment 68: According to the communications apparatus in Embodiment 67, each of the plurality of sidelink resources is a periodic resource. The periodicity and the validity period are applicable to each sidelink resource.

Embodiment 69: According to the communications apparatus in Embodiment 67, each of the plurality of sidelink resources is a periodic resource, the periodicity includes a periodicity of each sidelink resource, and the validity period includes a validity period of each sidelink resource.

Embodiment 70: According to the communications apparatus in Embodiment 67, when the first indication information indicates that each of the plurality of sidelink resources is a periodic resource, the first indication information further indicates a periodicity and/or a validity period of each of the plurality of sidelink resources.

Embodiment 71: According to the communications apparatus in Embodiment 67, the first indication information is a preset value, and the first indication information indicates that the plurality of sidelink resources are all aperiodic resources.

Embodiment 72: According to the communications apparatus in Embodiment 67, the plurality of sidelink resources include a periodic resource and an aperiodic resource, the first information further includes second indication information, the second indication information indicates the periodic resource in the plurality of sidelink resources, and the first indication information indicates the aperiodic resource in the plurality of sidelink resources.

Embodiment 73: According to the communications apparatus in Embodiment 72, the periodicity and the validity period are applicable to each periodic resource in the plurality of sidelink resources.

Embodiment 74: According to the communications apparatus in Embodiment 72, the periodicity includes a periodicity of each periodic resource in the plurality of sidelink resources, and the validity period includes a validity period of each periodic resource.

Embodiment 75: According to the communications apparatus in Embodiment 69 or Embodiment 74, different periodic resources in the plurality of sidelink resources have different periodicities, and the different periodic resources have a same validity period.

Embodiment 76: According to the communications apparatus in any one of Embodiment 67 to Embodiment 75, the validity period includes a quantity of repetitions or valid duration.

Embodiment 77: According to the communications apparatus in any one of Embodiment 67 to Embodiment 76, a start moment of the valid duration is a moment at which the second terminal sends a trigger message, and the trigger message is used to trigger the first terminal to send the first information to the second terminal; or a start moment of the valid duration is a moment at which the first terminal sends the first information; or a start moment of the valid duration is a start moment of the earliest sidelink resource in the plurality of sidelink resources; or a start moment of the valid duration is a start moment of a sidelink resource.

Embodiment 78: According to the communications apparatus in Embodiment 76 or Embodiment 77, valid duration of a first periodic resource in the plurality of sidelink resources is determined based on an end moment of the first periodic resource and a start moment of the first periodic resource.

Embodiment 79: According to the communications apparatus in any one of Embodiment 75 to Embodiment 78, a quantity of repetitions of the first periodic resource in the plurality of sidelink resources is determined based on the valid duration of the first periodic resource and a periodicity of the first periodic resource.

Embodiment 80: According to the communications apparatus in Embodiment 79, the quantity of repetitions of the first periodic resource is obtained by dividing the valid duration of the first periodic resource by the periodicity of the first periodic resource and performing rounding.

Embodiment 81: According to the communications apparatus in any one of Embodiment 67 to Embodiment 80, the communications module is further configured to receive the data from the second terminal on a target sidelink resource in the plurality of sidelink resources.

Embodiment 82: A communications apparatus is provided. The communications apparatus is a second terminal or a chip or a chip system applied to the second terminal, and the communications apparatus includes a communications module and a processing module. The communications module is configured to receive first information from a first terminal, where the first information includes a periodicity and a validity period of a periodic resource in a plurality of sidelink resources, and/or first indication information, the first indication information indicates the periodic resource or an aperiodic resource in the plurality of sidelink resources, and the plurality of sidelink resources can be used by the second terminal to send data to the first terminal. The processing module is configured to determine the aperiodic resource in the plurality of sidelink resources based on the first information; and/or configured to determine a periodicity of each periodic resource in the plurality of sidelink resources and a validity period of each periodic resource based on the first information.

Embodiment 83: According to the communications apparatus in Embodiment 82, the periodicity and the validity period are applicable to each of the plurality of sidelink resources. The processing module is configured to: determine the periodicity as the periodicity of each periodic resource, and determine the validity period as the validity period of each periodic resource.

Embodiment 84: According to the communications apparatus in Embodiment 82, the periodicity includes a periodicity of each sidelink resource, and the validity period includes a validity period of each sidelink resource.

Embodiment 85: According to the communications apparatus in Embodiment 82, the first indication information indicates that the plurality of sidelink resources are all periodic resources, and indicates a periodicity and/or a validity period of each of the plurality of sidelink resources. The processing module is configured to: determine, based on the first indication information, that the plurality of sidelink resources are all periodic resources, and determine the periodicity of each periodic resource and/or the validity period of each periodic resource based on the first indication information.

Embodiment 86: According to the communications apparatus in Embodiment 82, the first indication information is a preset value, and the processing module is configured to determine that the plurality of sidelink resources are all aperiodic resources.

Embodiment 87: According to the communications apparatus in Embodiment 82, the first information further includes second indication information, the second indication information indicates the periodic resource in the plurality of sidelink resources, and the first indication information indicates the aperiodic resource in the plurality of sidelink resources. The processing module is configured to determine the aperiodic resource in the plurality of sidelink resources based on the first information; and/or the processing module is configured to determine the periodic resource in the plurality of sidelink resources based on the second indication information.

Embodiment 88: According to the communications apparatus in Embodiment 87, the periodicity and the validity period are applicable to each periodic resource in the plurality of sidelink resources.

Embodiment 89: According to the communications apparatus in Embodiment 87, the periodicity includes the periodicity of each periodic resource in the plurality of sidelink resources, and the validity period includes the validity period of each periodic resource.

Embodiment 90: According to the communications apparatus in Embodiment 84 or Embodiment 89, different periodic resources in the plurality of sidelink resources have different periodicities, and the different periodic resources have a same validity period.

Embodiment 91: According to the communications apparatus in any one of Embodiment 52 to Embodiment 90, the validity period includes a quantity of repetitions or valid duration.

Embodiment 92: According to the communications apparatus in any one of Embodiment 80 to Embodiment 91, a start moment of the valid duration is a moment at which the second terminal sends a trigger message, and the trigger message is used to trigger the first terminal to send the first information to the second terminal; or a start moment of the valid duration is a moment at which the first terminal sends the first information; or a start moment of the valid duration is a start moment of the earliest sidelink resource in the plurality of sidelink resources; or a start moment of the valid duration is a start moment of a sidelink resource.

Embodiment 93: According to the communications apparatus in Embodiment 91 or Embodiment 92, valid duration of a first periodic resource in the plurality of sidelink resources is determined based on an end moment of the first periodic resource and a start moment of the first periodic resource.

Embodiment 94: According to the communications apparatus in any one of Embodiment 90 to Embodiment 93, a quantity of repetitions of the first periodic resource in the plurality of sidelink resources is determined based on the valid duration of the first periodic resource and a periodicity of the first periodic resource.

Embodiment 95: According to the communications apparatus in Embodiment 94, the quantity of repetitions of the first periodic resource is obtained by dividing the valid duration of the first periodic resource by the periodicity of the first periodic resource and performing rounding.

Embodiment 96: According to the communications apparatus in any one of Embodiment 82 to Embodiment 95, the communications module is further configured to send the data to the first terminal on a target sidelink resource in the plurality of sidelink resources.

Some or all of the foregoing embodiments may be implemented by using software, hardware, firmware, or any combination thereof. When being implemented by using the software, all or some of the foregoing embodiments may be implemented in a form of a computer program product. The computer program product includes one or more computer programs or instructions. When the computer programs or instructions are loaded and executed on a computer, all or some of the procedures or functions according to embodiments of this application are generated. The computer may be a general-purpose computer, a dedicated computer, a computer network, a network device, user equipment, or another programmable apparatus. The computer programs or instructions may be stored in a computer-readable storage medium, or may be transmitted from one computer-readable storage medium to another computer-readable storage medium. For example, the computer programs or instructions may be transmitted from one website, computer, server, or data center to another website, computer, server, or data center in a wired manner or in a wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), may be a semiconductor medium, for example, a solid-state drive (solid-state drive, SSD), or the like.

Although this application is described with reference to all the embodiments herein, in a process of implementing this application that claims protection, a person skilled in the art may understand and implement another variation of the disclosed embodiments by viewing the accompanying drawings, disclosed content, and the appended claims. In the claims, the term "comprising" (comprising) does not exclude another component or another step, and "a" or "one" does not exclude a case of "a plurality of'. A single processor or another unit may implement several functions enumerated in the claims. Some measures are recorded in dependent claims that are different from each other, but this does not mean that these measures cannot be combined to produce a better effect.

Although this application is described with reference to specific features and all the embodiments thereof, it is clear that various modifications and combinations may be made to them without departing from the spirit and scope of this application. Correspondingly, this specification and the accompanying drawings are merely example description of this application defined by the appended claims, and are considered as any or all of modifications, variations, combinations or equivalents that cover the scope of this application. It is clear that a person skilled in the art can make various modifications and variations to this application without departing from the spirit and scope of this application. In this way, this application is intended to cover these modifications and variations of this application provided that they fall within the scope of the claims of this application and their equivalent technologies.

## Claims

1. A method for indicating a sidelink resource, comprising:
determining, by a first terminal, a plurality of sidelink resources, wherein the plurality of sidelink resources can be used by a second terminal to send data to the first terminal, and the plurality of sidelink resources comprise an aperiodic resource and/or a periodic resource; and
sending, by the first terminal, first information to the second terminal, wherein the first information comprises a periodicity of the periodic resource and a validity period of the periodic resource, and/or first indication information, and the first indication information indicates the periodic resource or the aperiodic resource in the plurality of sidelink resources.

2. The method according to claim 1, wherein each of the plurality of sidelink resources is a periodic resource, and the periodicity and the validity period are applicable to each sidelink resource.

3. The method according to claim 1, wherein each of the plurality of sidelink resources is a periodic resource, the periodicity comprises a periodicity of each sidelink resource, and the validity period comprises a validity period of each sidelink resource.

4. The method according to claim 1, wherein when the first indication information indicates that each of the plurality of sidelink resources is a periodic resource, the first indication information further indicates a periodicity and/or a validity period of each of the plurality of sidelink resources.

5. The method according to claim 1, wherein the first indication information is a preset value, and the first indication information indicates that the plurality of sidelink resources are all aperiodic resources.

6. The method according to claim 1, wherein the plurality of sidelink resources comprise a periodic resource and an aperiodic resource, the first information further comprises second indication information, the second indication information indicates the periodic resource in the plurality of sidelink resources, and the first indication information indicates the aperiodic resource in the plurality of sidelink resources.

7. The method according to claim 6, wherein the periodicity and the validity period are applicable to each periodic resource in the plurality of sidelink resources.

8. The method according to claim 6, wherein the periodicity comprises a periodicity of each periodic resource in the plurality of sidelink resources, and the validity period comprises a validity period of each periodic resource.

9. The method according to claim 3 or 8, wherein different periodic resources in the plurality of sidelink resources have different periodicities, and the different periodic resources have a same validity period.

10. The method according to any one of claims 1 to 9, wherein the validity period comprises a quantity of repetitions or valid duration.

11. The method according to any one of claims 1 to 10, wherein a start moment of the valid duration is a moment at which the second terminal sends a trigger message, and the trigger message is used to trigger the first terminal to send the first information to the second terminal; or
a start moment of the valid duration is a moment at which the first terminal sends the first information; or
a start moment of the valid duration is a start moment of the earliest sidelink resource in the plurality of sidelink resources; or
a start moment of the valid duration is a start moment of a sidelink resource.

12. The method according to claim 10 or 11, wherein valid duration of a first periodic resource in the plurality of sidelink resources is determined based on an end moment of the first periodic resource and a start moment of the first periodic resource.

13. The method according to any one of claims 9 to 12, wherein a quantity of repetitions of the first periodic resource in the plurality of sidelink resources is determined based on the valid duration of the first periodic resource and a periodicity of the first periodic resource.

14. The method according to claim 13, wherein the quantity of repetitions of the first periodic resource is obtained by dividing the valid duration of the first periodic resource by the periodicity of the first periodic resource and performing rounding.

15. The method according to any one of claims 1 to 14, wherein the method further comprises:
receiving, by the first terminal, the data from the second terminal on a target sidelink resource in the plurality of sidelink resources.

16. A computer-readable storage medium, wherein the readable storage medium stores instructions, and when the instructions are executed, the method according to any one of claims 1 to 15 is implemented.

17. A chip, wherein the chip comprises a processor, the processor is coupled to a communications interface, the processor is configured to run a computer program or instructions to implement the method according to any one of claims 1 to 15, and the communications interface is configured to communicate with a module other than the chip.

18. A communications apparatus, comprising at least one processor, wherein the at least one processor is coupled to a memory, and the at least one processor is configured to run instructions stored in the memory to perform the method according to any one of claims 1 to 15.

19. A communications system, comprising a first terminal and a second terminal, wherein the first terminal is configured to perform the method according to any one of claims 1 to 15, and the second terminal is configured to: receive first information from the first terminal, and determine an aperiodic resource in a plurality of sidelink resources based on the first information; and/or determine a periodicity and a validity period of each periodic resource in the plurality of sidelink resources based on the first information.
